(19) Europäisches Patentamt
European Patent Office
Office européen des brevets

(11) **EP 3 230 384 B1**

(12) **EUROPÄISCHE PATENTSCHRIFT**

(45) Veröffentlichungstag und Bekanntmachung des Hinweises auf die Patenterteilung:
**11.03.2020  Patentblatt 2020/11**

(21) Anmeldenummer: **15797857.8**

(22) Anmeldetag: **23.11.2015**

(51) Int Cl.:
*C09C 1/00* (2006.01)     *C04B 35/628* (2006.01)
*C09D 1/00* (2006.01)     *D21H 19/38* (2006.01)
*D21H 21/30* (2006.01)     *D21H 21/40* (2006.01)
*C09D 7/40* (2018.01)     *C08K 3/04* (2006.01)

(86) Internationale Anmeldenummer:
**PCT/EP2015/002352**

(87) Internationale Veröffentlichungsnummer:
**WO 2016/091355 (16.06.2016 Gazette 2016/24)**

(54) **NICHTMETALLISCHE PIGMENTE MIT METALLISCHEN EIGENSCHAFTEN**

NON-METALLIC PIGMENTS HAVING METAL PROPERTIES

PIGMENTS NON MÉTALLIQUES À PROPRIÉTÉS MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.12.2014  DE 102014018275**

(43) Veröffentlichungstag der Anmeldung:
**18.10.2017  Patentblatt 2017/42**

(73) Patentinhaber: **Merck Patent GmbH
64293 Darmstadt (DE)**

(72) Erfinder:
• **RUEGER, Reinhold
  63322 Roedermark (DE)**
• **KLEIST, Bjoern
  67578 Gimbsheim (DE)**

(56) Entgegenhaltungen:
**EP-A1- 0 950 693     US-A- 3 087 827
US-A1- 2004 165 272     US-B1- 6 686 042**

**Beschreibung**

Die vorliegende Erfindung betrifft nichtmetallische Interferenzpigmente mit metallischen Eigenschaften, insbesondere plättchenförmige Interferenzpigmente, die auf einem Träger eine dünne hochbrechende Schicht sowie eine äußerste Schicht aufweisen, die kristallinen Kohlenstoff in Form von Graphit und/oder Graphen enthält, ein Verfahren zur Herstellung solcher Pigmente sowie die Verwendung der so hergestellten Pigmente.

Metalleffektpigmente werden seit vielen Jahren in Beschichtungen zur Erzeugung von metallischen Effekten eingesetzt, beispielsweise in Druckfarben oder in Metallic-Lacken für Automobile. Klassische Metalleffektpigmente bestehen aus plättchenförmigen Metallpartikeln, deren optische Wirkung auf der gerichteten Reflexion von einfallendem Licht an der in idealer Weise flächig und plan ausgebildeten Oberfläche der Metallteilchen beruht, die im jeweiligen Anwendungsmedium parallel zur Oberfläche ausgerichtet vorliegen.

Wesentliche Merkmale für den Metalleffekt einer Beschichtung sind der hohe metallische Glanz, der Helligkeitsflop, das Deckvermögen und die Abbildeschärfe (DOI). Der Helligkeitsflop stellt das Vermögen der Beschichtung dar, unter verschiedenen Beleuchtungs- und/oder Betrachtungswinkeln den Eindruck einer verschiedenen Helligkeit bei unveränderter Farbgebung der Beschichtung zu hinterlassen, während das DOI die Abbildeschärfe einer Spiegelung in der Beschichtung beschreibt. Mit Hilfe dieser Parameter wird auch die Qualität eines Metalleffektpigmentes beurteilt.

Wichtige Parameter zur Charakterisierung von Metalleffektpigmenten sind die Plättchenform, der Formfaktor (Verhältnis mittlerer Teilchendurchmesser zu mittlerer Teilchendicke), die Teilchengröße sowie die Qualität der Oberflächenglätte der Plättchen.

Die weltweit am häufigsten eingesetzten Typen von Metalleffektpigmenten bestehen aus Aluminium, daneben sind noch Kupfer- und Kupfer/ZinkPigmente oder auch Zinkpigmente im Einsatz. Form, Dicke, Größe und Oberflächengüte der Metallpigmente werden durch das Herstellverfahren bestimmt.

Höherwertige Aluminiumpigmente, die als Silberdollars bezeichnet werden, werden mittels eines mechanischen Verfahrens aus Aluminiumgrieß hergestellt und weisen eine runde Plättchenform sowie eine vergleichsweise glatte Oberfläche auf. Solche Pigmente werden beispielsweise unter der Bezeichnung Stapa® Metallux 2000 von der Firma Eckart GmbH angeboten.

Aus den Veröffentlichungen US 3 949 139 und US 4 321 087 sind besonders dünne Aluminiumpigmente mit einer Dicke von unter 100 nm bekannt. Diese Metallpigmente werden durch ein aufwendiges PVD-Verfahren hergestellt. Mittels solcher Pigmente sind im Vergleich zu herkömmlichen Aluminiumpigmenten höherwertige Beschichtungen mit hohem Glanz, Deckvermögen und hoher Abbildeschärfe möglich. Pigmente dieses Typs sind beispielsweise unter dem Namen Metallure® von der Firma Eckart GmbH erhältlich. Ihre Anwendung erfordert jedoch ein sehr spezielles anwendungstechnisches Know How um reproduzierbare Effekte zu erzielen, weil die Pigmente eine geringe mechanische Stabilität aufweisen und bei der Verarbeitung nur geringen Scherkräften ausgesetzt werden dürfen. Auch ist ihre Verwendung in wasserbasierenden Anwendungssystemen wegen der großen reaktiven Oberfläche problematisch. Für bestimmte Anwendungen, beispielsweise Pulverlacke, sind sie darüber hinaus gar nicht geeignet.

Generell erfordert die Anwendung von Metalleffektpigmenten, insbesondere von Aluminiumpigmenten, wegen ihrer Brennbarkeit einen besonders hohen Aufwand beim Brand- und Explosionsschutz. Wegen des hohen Reaktionsvermögens des unedlen Metalls ist auch die Stabilisierung von Aluminiumpigmenten enthaltenden Beschichtungszusammensetzungen vor und nach der Verarbeitung schwierig.

Es wurden deshalb in der Vergangenheit viele Versuche unternommen, Effektpigmente zur Verfügung zu stellen, die nicht aus Metallen bestehen, sondern auf geeigneten Trägermaterialien Schichten aus Metalloxiden und/oder Metallen aufweisen, mit denen sich metallischer Glanz erzeugen lässt. Die entsprechenden Pigmente verfügen, insbesondere wenn sie keine Metallschichten enthalten, bei guten Glanzwerten oft aber nur über ein geringes Deckvermögen, da sie in der Regel aus transparenten Trägerteilchen und/oder transparenten, auf den Trägerteilchen aufgebrachten Schichten bestehen.

Aus US 3,053,683 sind Glaspigmente bekannt, die auf ihrer Oberfläche eine Beschichtung aus Chrom, Aluminium oder Nickel aufweisen. In DE 101 53 197 werden Pigmente mit Metallglanz beschrieben, die auf der Oberfläche von plättchenförmigen, nichtmetallischen Substraten, die eine Dicke von kleiner als 200 nm aufweisen, eine das Substrat umhüllende Metallschicht aufweisen. Pigmente, die auf ihrer Oberfläche Metallschichten aufweisen, müssen aber häufig mit nachfolgenden, sehr dünnen Oxidschichten stabilisiert werden oder es findet im Anwendungsmedium oder bei der Lagerung eine spontane Oxidation der Metalle statt, wodurch die metallischen Eigenschaften der Pigmente abgeschwächt werden.

Insbesondere bei Lackschichten oder Drucken werden in zunehmendem Maße neben den gewünschten dekorativen Eigenschaften auch antistatische Eigenschaften, abschirmendes Verhalten gegenüber elektromagnetischer Strahlung oder elektrische Leitfähigkeit nachgefragt.

Immer noch gebräuchlich ist der Einsatz von Ruß oder Graphit als leitfähiger Füllstoff in den jeweiligen Anwendungsmedien. Allerdings führt die Anwendung von Ruß oder Graphit zur Dunkelfärbung der damit versetzten Materialien, was oft als nachteilig wahrgenommen wird.

Es sind daher bereits seit einiger Zeit elektrisch leitfähige Pigmente auf der Basis transparenter Substrate, vor allem auf der Basis dünner Glimmerplättchen, bekannt und verfügbar. Diese Pigmente weisen auf dem Glimmersubstrat in der Regel mindestens eine leitfähige Beschichtung aus einem dotierten Zinnoxid auf. Häufig wird mit Antimon dotiertes Zinndioxid eingesetzt. Pigmente dieser Art sind beispielsweise als Minatec® 31 CM oder Minatec® 51 CM der Firma Merck KGaA, Deutschland, kommerziell erhältlich. Sie sind u. a. in den Patentschriften DE 38 42 330, DE 42 37 990, EP 0 139 557, EP 0 359 569 und EP 0 743 654 beschrieben.

Solche Pigmente weisen eine hohe Transparenz und eine helle Eigenfarbe auf und bieten daher viele optische Vorteile gegenüber dem Einsatz von Ruß oder Graphit, verfügen jedoch meist über eine unbunte oder hellgraue Eigenfärbung. Um metallfarbene und/oder deckende leitfähige Anwendungsmedien zu erzielen müssen die leitfähigen Pigmente mit anderen Farbmitteln kombiniert eingesetzt werden. Solche Kombinationen sind technisch möglich, führen aber oft zu einer extrem hohen Pigmentmassekonzentration in den Anwendungsmedien. Insbesondere wird durch den Zusatz von Farbmitteln die Ausbildung von Leitpfaden im Anwendungsmedium vermindert oder unterbrochen, so dass es dort zu einer starken Erhöhung des elektrischen Widerstands kommt. Diese Erhöhung kann nicht in jedem Falle durch eine gleichermaßen erhöhte Konzentration an leitfähigen Pigmenten ausgeglichen werden, da die Anwendungssysteme technisch bedingte Grenzen der Pigmentbeladung aufweisen, deren Überschreitung zu Verarbeitungsproblemen oder Problemen bei der Erzielung der gewünschten technischen Ergebnisse führt.

Auch Pigmente mit oberflächlichen Metallschichten, die aus unedlen Metallen bestehen, die selbst eine sehr gute elektrische Leitfähigkeit aufweisen, bewirken im Anwendungsmedium oft nur eine deutlich abgeschwächte elektrische Leitfähigkeit, weil sie, wie oben bereits beschrieben, entweder spontan nachoxidieren oder über Metalloxidschichten in der Nachbeschichtung chemisch stabilisiert werden müssen. Wenn eine elektrische Leitfähigkeit von metallisch anmutenden Oberflächenbeschichtungen erforderlich ist, wird daher häufig auf mit Silber beschichtete Pigmente zurückgegriffen, die jedoch sehr teuer sind.

US 3,087,827 offenbart Glimmerpigmente, die mit Titandioxid oder Zirkonoxid beschichtet sind und eine äußere Schicht aus Kohlenstoff aufweisen.

EP 0 950 693 A1 beschreibt mehrschichtige Perlglanzpigmente auf der Basis eines absorbierenden plättchenförmigen Substrates, das mit alternierenden hoch- und niedrigbrechenden Schichten überzogen ist. Das absorbierende Substrat kann aus Graphitplättchen bestehen oder Graphit enthalten.

Aus US 2004/0165272 A1 sind optisch variable mehrlagige Interferenzpigmente bekannt, die drei- oder fünflagige Schichtsysteme aus abwechselnd dielektrischen Schichten und Kohlenstoffschichten aufweisen. Die optische Dicke der dielektrischen Schichten wird dabei gezielt auf die gewünschte Interferenzwellenlänge eingestellt.

Auch in US 6,686,042 B1 sind optisch variable Pigmente beschrieben, die symmetrisch oder unsymmetrisch aufgebaut sein können und auf einem Reflektorsubstrat einen Schichtaufbau aus alternierenden Absorptionsschichten und dielektrischen Schichten aufweisen. Bei den Absorptionsschichten kann es sich um Graphit handeln.

Es besteht daher ein Bedarf an elektrisch leitfähigen Pigmenten, mit denen sich optisch metallisch erscheinende, bevorzugt silber oder goldfarbene, elektrisch leitfähige Anwendungsmedien mit hohem Deckvermögen erhalten lassen, ohne dass weitere Farbmittel eingesetzt werden müssen.

Elektrisch leitfähige Effektpigmente sind an sich bekannt, allerdings weisen sie oft entweder eine zu geringe elektrische Leitfähigkeit oder ein zu geringes Deckvermögen bzw. eine dunkle Färbung auf, die optisch mit Metalleffektpigmenten nicht vergleichbar ist.

Um elektrisch leitfähige Effektpigmente zu erhalten, werden beispielsweise gemäß DE 41 40 296 A1 plättchenförmige Pigmente mit einer mit Rußpartikeln durchsetzten Metalloxidschicht überzogen, wobei letztere mit zusätzlichen Metalloxidpartikeln dotiert ist, um eine elektrische Leitfähigkeit des Pigmentes herzustellen oder zu erhöhen. Während es sich bei der Metalloxidschicht in der Regel um eine Titandioxidschicht handelt, werden in diese außer Rußpartikeln noch $SiO_2$ oder $Al_2O_3$ eingelagert, was zu einer verbesserten Leitfähigkeit führt. Allerdings erreichen die Pigmente lediglich einen spezifischen Pulverwiderstand von im besten Falle $2 \times 10^6$ Ohm*cm sowie eine schwarze bis hellgraue oder silbergraue Färbung, weisen aber keine metallische Optik bei hohem Deckvermögen auf.

Die vorab beschriebenen Pigmente aus dem Stand der Technik weisen entweder gute optische Metalleffekteigenschaften mit unbestimmten elektrischen Eigenschaften oder befriedigende elektrisch leitende Eigenschaften mit unbunter, nicht metallisch anmutender Farbstellung auf. Zur Herstellung von Anwendungsmedien mit verlässlichen abschirmenden oder antistatischen elektrischen Eigenschaften sind aber spezifische Pulverwiderstände der eingesetzten elektrisch leitfähigen Pigmente von höchstens $1 \times 10^6$ Ohm*cm notwendig um die geforderten elektrischen Eigenschaften der Endprodukte zu garantieren. Außerdem besteht immer noch ein Bedarf an Effektpigmenten mit attraktivem metallischen Erscheinungsbild, die die notwendige hohe elektrische Leitfähigkeit aufweisen.

Aufgabe der vorliegenden Erfindung ist es, Effektpigmente mit metallischer Optik und sehr hohem Deckvermögen zur Verfügung zu stellen, welche einen spezifischen Pulverwiderstand von höchstens $1 \times 10^6$ Ohm*cm oder kleiner aufweisen, chemisch stabil sowie gesundheitlich unbedenklich sind und sich in Anwendungsmedien wie Lacken, Druckfarben und Kunststoffen leicht verarbeiten lassen.

Darüber hinaus ist es auch Aufgabe der vorliegenden Erfindung, ein einfaches Verfahren zur Herstellung der vorab beschriebenen Pigmente zur Verfügung zu stellen.

Eine weitere Aufgabe der vorliegenden Erfindung besteht darin, die Verwendung derartiger Pigmente aufzuzeigen.

Die Aufgabe der vorliegenden Erfindung wird gelöst durch nichtmetallische Interferenzpigmente auf der Basis eines plättchenförmigen Trägers, wobei die Pigmente eine Teilchengröße mit einem volumengewichteten $d_{90}$-Wert von < 25 $\mu$m aufweisen und der Träger eine Beschichtung aus einer oder mehreren aufeinander folgenden Schichten aus einem farblosen Material mit einer Brechzahl n von n $\geq$ 1,8 mit einer geometrischen Gesamtschichtdicke von höchstens 70 nm aufweist, und wobei die Pigmente eine äußerste Schicht aufweisen, welche eine geometrische Schichtdicke im Bereich von 0.5 bis 5 nm aufweist und zu mindestens 95 Gew. %, bezogen auf das Gewicht dieser Schicht, aus Kohlenstoff besteht und kristallinen Kohlenstoff in Form von Graphit und/oder Graphen enthält, und wobei die Interferenzpigmente einen spezifischen Pulverwiderstand von kleiner als 1*10$^6$ Ohm*cm aufweisen, gemäß Anspruch 1.

Die Aufgabe der Erfindung wird ebenfalls gelöst durch ein Verfahren zur Herstellung der genannten leitfähigen Pigmente, wobei plättchenförmige Trägerteilchen, welche mit einer oder mehreren aufeinander folgenden Schichten aus einem farblosen Material mit einer Brechzahl n von n $\geq$ 1,8 mit einer geometrischen Gesamtschichtdicke von höchstens 70 nm beschichtet sind und eine Teilchengröße mit einem volumengewichteten $d_{90}$-Wert von < 25 $\mu$m aufweisen, in einem Reaktor in einem Trägergasstrom unter Zufuhr einer gasförmigen, Kohlenstoff haltigen Verbindung durch pyrolytische Zersetzung der Kohlenstoff haltigen Verbindung mit einer äußersten Schicht beschichtet werden, die zu mindestens 95 Gew.%, bezogen auf das Gewicht dieser Schicht, aus Kohlenstoff besteht und kristallinen Kohlenstoff in Form von Graphit und/oder Graphen enthält und mit einer geometrischen Schichtdicke im Bereich von 0.5 bis 5 nm aufgebracht wird, wobei als gasförmige, Kohlenstoff enthaltende Verbindung Aceton, Ethin oder 2-Methyl 3-butinol-2 eingesetzt wird, gemäß Anspruch 10.

Des Weiteren wird die Aufgabe der Erfindung gelöst durch die Verwendung der vorab beschriebenen elektrisch leitfähigen, nichtmetallischen Interferenzpigmente in Farben, Lacken, Druckfarben, Beschichtungszusammensetzungen, Sicherheitsanwendungen, Kunststoffen, keramischen Materialien, Gläsern, Papier, Folien, im Wärmeschutz, in Fußbodenbelägen, zur Lasermarkierung, in Trockenpräparaten oder Pigmentpräparationen.

Gegenstand der vorliegenden Erfindung ist ein nichtmetallisches, elektrisch leitfähiges, plättchenförmiges Interferenzpigment mit einem metallischen optischen Erscheinungsbild, welches auf einem nichtmetallischen plättchenförmigen Träger basiert und mit einer oder mehreren nichtmetallischen hochbrechenden Schichten mit geringer Gesamtschichtdicke sowie einer äußersten Schicht beschichtet ist, wobei die äußerste Schicht des Pigmentes zu mindestens 95 Gew. %, bezogen auf das Gewicht dieser Schicht, aus Kohlenstoff besteht und kristallinen Kohlenstoff in Form von Graphit und/oder Graphen enthält, gemäß Anspruch 1.

Die äußerste Schicht, die zu mindestens 95 Gew. %, bezogen auf das Gewicht dieser Schicht, aus Kohlenstoff besteht und kristallinen Kohlenstoff in Form von Graphit und/oder Graphen enthält, wird nachfolgend als "äußerste, kristallinen Kohlenstoff enthaltende Schicht" bezeichnet, sofern nicht anders angegeben.

Bevorzugt ist eine Ausführungsform der vorliegenden Erfindung, bei der die äußerste, kristallinen Kohlenstoff enthaltende Schicht zu mindestens 98 Gew.% aus Kohlenstoff besteht.

Diese äußerste, kristallinen Kohlenstoff enthaltenden Schicht umhüllt die sich unterhalb dieser äußersten Schicht auf dem Trägerplättchen befindliche(n) Schicht(en) und ist vorzugsweise kompakt und als geschlossene Schicht ausgebildet. Sie weist eine geometrische Dicke im Bereich von 0,5-5 nm, insbesondere von 1-3 nm, auf. Im unteren Schichtdickenbereich von 0,5 bis 3 nm entspricht dies einer einzelnen Graphenschicht oder Graphit, der aus sehr wenigen (<10) Kohlenstoffschichten zusammengesetzt ist.

Gegenüber Industrieruß, der auch als Carbon Black bezeichnet wird, weisen sowohl Graphen als auch Graphitkristalle eine deutlich höhere Ordnung auf. Als Carbon Black wird ein industriell durch thermische Zersetzung oder durch unvollständige Verbrennung von Kohlenwasserstoffen hergestellter feinteiliger Kohlenstoff bezeichnet, der aus kugelförmigen Primärteilchen besteht, die zu Aggregaten mit einer Teilchengröße unter 1000 nm verwachsen sind. Sie enthalten geringe Fremdbestandteile.

Während Graphen eine einzelne Schicht in Graphitstruktur darstellt, deren Natur in Analogie zu einem polyzyklischen aromatischen Kohlenwasserstoff von quasi unendlicher Größe beschrieben wird und bei der die Anordnung der Kohlenstoffatome in der Schicht Bienenwaben-ähnlich vorliegt, stellt Graphit eine allotrope Form des Elementes Kohlenstoff dar, die aus Schichten hexagonal angeordneter Kohlenstoffatome in einem planar kondensierten Ringsystem besteht. Die Schichten sind parallel zueinander in kristallographisch dreidimensionaler Fernordnung gestapelt. Es gibt zwei allotrope Formen mit verschiedener Stapelanordnung, hexagonal und rhomboedrisch.

Kohlenstoffarten, die das Element Kohlenstoff in der allotropen Form des Graphits enthalten, unanhängig von vorhandenen Strukturdefekten (Volumenanteil und Homogenität der kristallinen Domänen), bei denen also eine dreidimensionale kristalline Fernordnung im Material durch Beugungsmethoden nachgewiesen werden kann, werden auch als graphitischer Kohlenstoff bezeichnet.

Nach dieser Nomenklatur (siehe W. Klose et. al., "Terminologie zur Beschreibung von Kohlenstoff als Feststoff", Deutsche Keramische Gesellschaft, Fachausschussbericht Nr. 33, 3. Bericht des Arbeitskreises Kohlenstoff, 2009) ist es gerechtfertigt, die kristallinen Kohlenstoff enthaltende äußerste Schicht der erfindungsgemäßen Interferenzpigmente auch als "Schicht aus graphitischem Kohlenstoff" zu bezeichnen.

Aus den genannten Strukturunterschieden erklären sich auch die zumindest teilweise unterschiedlichen Eigenschaften von Graphen und Graphitkristallen im Vergleich zu üblichen Industrierußen. So weisen erstere beispielsweise eine deutlich größere elektrische Leitfähigkeit als gewöhnlicher partikulärer Industrieruß auf. Dabei ist bei Graphitkristallen das elektrische Leitvermögen parallel und senkrecht zu den einzelnen Kohlenstoffebenen unterschiedlich stark ausgeprägt.

Überraschenderweise ist es nun den Erfindern der vorliegenden Erfindung gelungen, nichtmetallische Effektpigmente mit metallischem optischen Erscheinungsbild herzustellen, bei denen das Vorliegen von Graphen bzw. Graphitkristallen in einer im Wesentlichen aus Kohlenstoff bestehenden äußeren Schicht (Schicht aus graphitischem Kohlenstoff) auf einem plättchenförmigen Trägermaterial nachgewiesen werden kann. Das erklärt auch die hohe elektrische Leitfähigkeit der erhaltenen Pigmente, die über die geometrische Schichtdicke der äußersten, kristallinen Kohlenstoff enthaltenden Schicht auf den Trägerpartikeln gezielt eingestellt werden kann. Dabei steigt bereits bei einer sehr geringen geometrischen Schichtdicke von nur wenigen Nanometern die elektrische Leitfähigkeit der erhaltenen Pigmente deutlich an, die sich über einen deutlich verringerten spezifischen Pulverwiderstand der erhaltenen Pigmente bestimmen lässt.

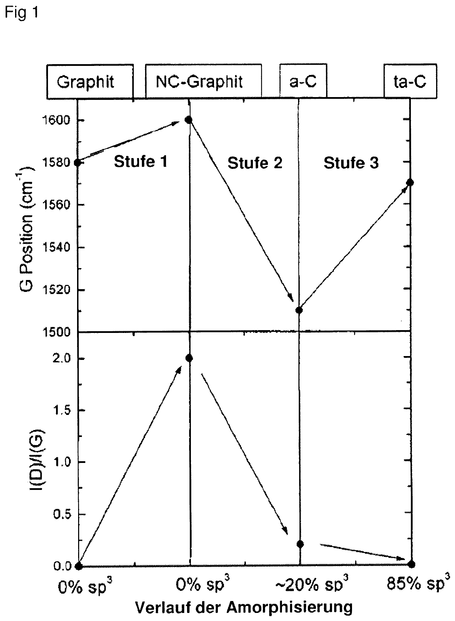

Die Charakterisierung der Kohlenstoffschicht erfolgt mittels Raman Spektroskopie. Die Auswertung erfolgt gemäß "Interpretation of Raman spectra of disordered and amorphous carbon, A.C. Ferrari and J. Robertson, University Cambridge, 24.11.1999". Eine Kohlenstoffschicht wird im Wesentlichen mit zwei Peaks beschrieben, welche in den entsprechenden Raman Spektren aufgrund von $sp^2$ hybridisierten Kohlenstoffatomen auftreten. Der G-Peak (Graphite) bei einer Wellenzahl von 1580 bis 1600 $cm^{-1}$ resultiert aus Streckschwingungen von $sp^2$ hybridisierten Kohlenstoffatomen in Ringen und Ketten. Der D-Peak (Disorder) liegt hingegen im einem Wellenzahlbereich von 1360 bis 1400 $cm^{-1}$ und resultiert aus zentrumsymmetrischen Streckschwingungen. In reinem kristallinen Graphit ist diese Schwingung verboten und tritt daher nur in untergeordneten Systemen auf. Wird von dem zu charakterisierenden Material aus dem erhaltenen Raman Spekrum die Wellenzahl der erhaltenen Peaks sowie das Intensitätsverhältnis I(D)/I(G) bestimmt, kann nach dem Diagramm gemäß Figur 1 zwischen Graphit, NC Graphit (nanocrystalline Graphit), a-C (amorphous Carbon) und ta-C (tetrahedal amorphous carbon) unterschieden werden. Auf diese Weise wird das Vorliegen von nanokristallinem Graphit in den erfindungsgemäßen Pigmenten bestätigt.

Als plättchenförmig werden Pigmente oder Trägermaterialien bezeichnet, wenn ihre äußere Form einem flachen Gebilde entspricht, welches mit seiner Ober- und Unterseite zwei annähernd parallel zueinander stehende Oberflächen aufweist, deren Ausdehnung in Länge und Breite die größte Ausdehnung des Pigmentes oder des Trägermaterials darstellt. Der Abstand zwischen den genannten Oberflächen, der die Dicke des Plättchens darstellt, weist dagegen eine geringere Ausdehnung auf.

Die Ausdehnung der Pigmente in Länge und Breite, die auch den Wert darstellt, der gewöhnlich als die Teilchengröße der Interferenzpigmente bezeichnet wird, beträgt dabei zwischen 1 und 35 $\mu$m bei einem volumengewichteten $d_{90}$-Wert von < 25 $\mu$m. Dabei liegt der volumengewichtete $d_{50}$-Wert bei < 15 $\mu$m. Die volumengewichteten $d_{90}$- bzw. $d_{50}$-Werte geben jeweils an, dass 90 beziehungsweise 50 Volumenprozent der Pigmente einer Pigmentschüttung eine Teilchengröße aufweisen, die unterhalb des genannten Wertes liegt.

Vorzugsweise liegt der volumengewichtete $d_{90}$-Wert bei kleiner als 15 $\mu$m und der volumengewichtete $d_{50}$-Wert bei kleiner als 10 $\mu$m.

Die Teilchengröße der erfindungsgemäßen nichtmetallischen Interferenzpigmente ist hier durchaus kritisch, weil eine geringe Teilchengröße, verbunden mit einem sehr hohen Feinanteil, ausschlaggebend für das sehr hohe Deckvermögen der Pigmente in den jeweiligen Anwendungsmedien ist, während die einzelnen Pigmentpartikel als solche semitransparent sind, also lediglich ein mittleres Deckungsvermögen in der Anwendung erwarten ließen.

Die Teilchengröße und die Teilchengrößenverteilung können über verschiedene fachübliche Methoden ermittelt werden. Bevorzugt wird erfindungsgemäß jedoch die Laserbeugungsmethode in einem Standardverfahren mittels eines Malvern Mastersizer 2000, APA200 (Produkt der Fa. Malvern Instruments Ltd., UK) eingesetzt. Diese Verfahren hat den Vorteil, dass Partikelgröße und Partikelgrößenverteilung gleichzeitig unter Standardbedingungen bestimmt werden können.

Die Partikelgröße sowie die Dicke von Einzelpartikeln lässt sich außerdem mit Hilfe von SEM (Scanning Electron Microscope) Bildern ermitteln. Bei diesen können Partikelgröße und geometrische Partikeldicke über direktes Ausmessen ermittelt werden. Zur Ermittlung von Durchschnittswerten werden mindestens 1000 Partikel einzeln ausgewertet und die Ergebnisse gemittelt.

Die Dicke der Interferenzpigmente beträgt zwischen 0,1 und 0,5 $\mu$m, insbesondere zwischen 0,2 und 0,4 $\mu$m.

Die erfindungsgemäßen Interferenzpigmente weisen einen Formfaktor (Verhältnis von Länge bzw. Breite zu Dicke) im Bereich von 20:1 bis 200:1 auf, bevorzugt im Bereich von 40:1 bis 100:1.

Als elektrisch leitfähig im Sinne der vorliegenden Erfindung wird ein Pigment dann angesehen, wenn es einen spezifischen Pulverwiderstand im Bereich von höchstens 1 MegaOhm*cm (1x10$^6$ Ohm*cm) aufweist. Bevorzugt weisen die erfindungsgemäßen Interferenzpigmente einen spezifischen Pulverwiderstand im Bereich von höchstens 1x 10$^4$

Ohm*cm, insbesondere im Bereich von 10 bis 1000 Ohm*cm und besonders bevorzugt im Bereich von 10 bis kleiner als 100 Ohm*cm, auf. Die hier angegebenen Werte beziehen sich auf Feldstärken von bis zu 10 V/mm, wobei sich die Feldstärke auf die angelegte Meßspannung bezieht.

Die Messung des spezifischen Pulverwiderstandes erfolgt dabei in der Weise, dass in einem Acrylglas-Rohr mit einem Durchmesser von 2 cm eine Menge von jeweils 0,5 g Pigment mit Hilfe eines Gewichts von 10 kg mit einem Metallstempel gegen eine Metallelektrode zusammengepresst wird. An den so verpressten Pigmenten wird der elektrische Widerstand R gemessen. Aus der Schichtdicke L des komprimierten Pigmentes ergibt sich der spezifische Widerstand p des Pigmentpulvers gemäß der folgenden Beziehung:

$$\rho = R^* \, \pi^* (d/2)^2/L \; (Ohm^*cm).$$

Unter Interferenzpigmenten mit metallischem optischen Erscheinungsbild werden solche Effektpigmente verstanden, die auf der Basis mindestens eines plättchenförmigen Trägermaterials und einer oder mehrerer auf diesem befindlichen dünnen Schichten in einem Anwendungsmedium, in dem die Pigmente planar ausgerichtet sind, eingestrahltes Licht durch Reflexion an Grenzflächen und Interferenzeffekte über einen breiten Wellenlängenbereich des sichtbaren Spektrums des Sonnenlichtes in einer solchen Weise gerichtet reflektieren, dass in der Summe eine sehr hohe Lichtreflexion durch den nicht mit Hilfsmitteln ausgestatteten Betrachter wahrnehmbar ist. Diese durch Interferenzeffekte verstärkte, nicht selektive, gerichtete Lichtreflexion wird vom Betrachter als hoher Helligkeitswert wahrgenommen, die wahrnehmbare Farbe beschränkt sich dabei auf silber- oder goldfarbig.

Für den Betrachter sichtbar ist im Applikationsmedium daher eine silberne oder goldene Interferenzfarbe mit hohem Glanz und hoher Helligkeit, wenn sich das Applikationsmedium auf weißem oder schwarzem Grund befindet. Dabei wird der jeweilige Untergrund durch die Pigmente im Applikationsmedium vollständig abgedeckt und die Beschichtung selbst weist keine Unterschiede abhängig von der Farbstellung des jeweiligen Untergrundes auf.

Unter verschiedenen Beleuchtungs- und/oder Betrachtungswinkeln ist dabei lediglich ein unterschiedliches Helligkeitsverhalten im Applikationsmedium wahrnehmbar (Helligkeitsflop).
Die Einstellung der Interferenzfarbe der erfindungsgemäßen Pigmente erfolgt im Wesentlichen über das Material und die Dicke des Pigmentträgers und der hochbrechenden Schicht oder der hochbrechenden Schichten auf dem Träger.

Bei dem plättchenförmigen Träger handelt es sich erfindungsgemäß um einen transparenten, farblosen Träger, beispielsweise um natürliche oder synthetische Glimmerplättchen, Plättchen aus Kaolin, Sericit oder Talk, BiOCl-Plättchen, $TiO_2$-Plättchen, Glasplättchen, Borosilikatplättchen, Bornitrid-Plättchen, $SiO_2$-Plättchen, $Al_2O_3$-Plättchen, oder Gemische aus zwei oder mehreren von diesen. Besonders bevorzugt sind natürliche oder synthetische Glimmerplättchen jeder Art, andere Schichtsilikate wie Talk, Kaolin oder Sericit, plättchenförmiges $SiO_2$, plättchenförmiges $Al_2O_3$, plättchenförmiges $TiO_2$ und/oder Glasplättchen. Die Teilchengröße der Trägerplättchen liegt in demselben Bereich wie die oben angegebenen Teilchengrößen für die erfindungsgemäßen Interferenzpigmente, nämlich im Bereich zwischen 1 und 35 $\mu$m bei den vorab gegebenen Beschränkungen bezüglich der $d_{90}$- und $d_{50}$-Werte. Die Dicke der Trägerplättchen liegt zwischen 0,1 und 0,45 $\mu$m, vorzugsweise zwischen 0,2 und 0,4 $\mu$m.

Erfindungsgemäß liegt zwischen dem plättchenförmigen Träger und der äußersten, kristallinen Kohlenstoff enthaltenden Schicht eine oder mehrere direkt aufeinander folgende Schichten aus einem farblosen Material mit einer Brechzahl n im Bereich von n ≥ 1.8 vor. Diese Schicht oder diese Schichten weisen eine geometrische Gesamtdicke von höchstens 70 nm, vorzugsweise im Bereich von 40 bis 70 nm, insbesondere im Bereich von 50 bis kleiner als 70 nm, auf.

Materialien mit einer Brechzahl im Bereich von n ≥ 1.8 werden als hochbrechend bezeichnet.

Als solche hochbrechende Materialien liegen in den Pigmenten gemäß der vorliegenden Erfindung vorzugsweise farblose Metalloxide und/oder Metalloxidhydrate, nämlich Titandioxid, Titandioxidhydrat, Zirkondioxid, Zirkondioxidhydrat, Zinnoxid, Zinnoxidhydrat, Zinkoxid, Zinkoxidhydrat, und/oder Mischphasen aus diesen vor. Sie können in einer oder auch in mehreren Schichten zwischen dem plättchenförmigen Träger und der äußersten, kristallinen Kohlenstoff enthaltenden Schicht vorliegen. Liegen mehrere Schichten vor, sind sie unmittelbar aufeinander angeordnet.

Die Schicht(en) aus hochbrechenden Materialien können auch auf einer Schicht aus niedrig brechenden Materialien, beispielsweise aus Metalloxiden und/oder Metalloxidhydraten wie Siliziumdioxid, Siliziumdioxidhydrat, Aluminiumoxid, Aluminiumoxidhydrat und/oder aus Mischphasen von diesen, oder aus $MgF_2$, aufgebracht sein und/oder von einer solchen Schicht umhüllt werden.

Bevorzugt ist jedoch die Ausführungsform der vorliegenden Erfindung, bei welcher die Schicht oder die Schichten aus einem farblosen Material mit einer Brechzahl n im Bereich von n ≥ 1,8 zwischen dem Träger und der kristallinen Kohlenstoff enthaltenden Schicht angeordnet ist bzw. angeordnet sind, und die Pigmente keine weiteren Schichten aufweisen.

Besonders bevorzugt besteht die Schicht oder die Schichten mit einer Brechzahl n im Bereich von n ≥ 1.8 aus Titandioxid und/oder Titandioxidhydrat und liegt in stöchiometrischer Zusammensetzung, also nicht in reduziertem Zustand, vor.

Erfindungsgemäß insbesondere bevorzugt sind nichtmetallische, elektrisch leitfähige Pigmente, bei denen sich zwischen einem plättchenförmigen Träger und der äußersten, kristallinen Kohlenstoff enthaltenden Schicht eine Schicht aus Titandioxid (Anatas oder Rutilmodifikation) und/oder Titandioxidhydrat (nachfolgend : $TiO_2$-Schicht) befindet, wobei die geometrische Schichtdicke der $TiO_2$-Schicht kleiner oder gleich 70 nm ist. Besonders bevorzugt sind nichtmetallische, elektrisch leitfähige Interferenzpigmente, bei denen sich auf einem plättchenförmigen Träger aus natürlichem oder synthetischem Glimmer, $SiO_2$-, $TiO_2$-, $Al_2O_3$- oder Glasplättchen eine Schicht aus Titandioxid (Anatas oder Rutilmodifikation) und/oder Titandioxidhydrat befindet, gefolgt von einer äußersten, kristallinen Kohlenstoff enthaltenden Schicht. Insbesondere sind bei diesem Schichtaufbau als plättchenförmige Trägermaterialien natürlicher oder synthetischer Glimmer, $SiO_2$-Plättchen und $Al_2O_3$-Plättchen bevorzugt. Auch hier gilt das Limit für die geometrische Schichtdicke der $TiO_2$-Schicht von höchstens 70 nm, vorzugsweise von 40 bis 70 nm, wie vorab bereits beschrieben.

Die erfindungsgemäßen nichtmetallischen, elektrisch leitfähigen Interferenzpigmente sind als Einzelpartikel semitransparent, das heißt, dass die Einzelpartikel bei planarer Ausrichtung zur Lichtquelle nicht nur einen Teil des einfallenden sichtbaren Lichtes transmittieren oder reflektieren, sondern auch einen gewissen Anteil des einfallenden Lichtes im sichtbaren Wellenlängenbereich absorbieren. Dies ist im Wesentlichen dem Absorptionsvermögen der äußersten, kristallinen Kohlenstoff enthaltenden Schicht zuzuschreiben, weil keine weiteren absorbierenden Materialien im Schichtsystem des Interferenzpigmentes enthalten sind. Es hat sich dabei in überraschender Weise herausgestellt, dass das Absorptionsvermögen der erfindungsgemäßen elektrisch leitfähigen Interferenzpigmente mit dem Grad ihrer elektrischen Leitfähigkeit korreliert. Demzufolge steigt mit wachsender Schichtdicke der äußersten, kristallinen Kohlenstoff enthaltenden Schicht das elektrische Leitvermögen der erfindungsgemäßen Pigmente stetig an.

Bei einer geometrischen Schichtdicke der äußersten, kristallinen Kohlenstoff enthaltenden Schicht im Bereich von 1 bis 5 nm ändert sich dagegen die durch den Träger und die darauf befindliche(n) hochbrechende(n) Schicht(en) erzeugte Interferenzfarbe sowie der hohe Glanz des Pigmentes praktisch nicht. Es ändert sich aber mit steigender Schichtdicke der äußersten, kristallinen Kohlenstoff enthaltenden Schicht der ΔL-Wert und damit der Grad des Deckvermögens, der mit den erfindungsgemäßen Pigmenten im Anwendungsmedium erzielt werden kann.

Der ΔL-Wert ist ein Maß für die Transparenz von Interferenzpigmenten. Ist er besonders hoch, handelt es sich um Interferenzpigmente mit hoher Transparenz, die nicht über ein nennenswertes Deckvermögen verfügen, wogegen ein sehr niedriger ΔL-Wert ein Zeichen für Interferenzpigmente mit hohem Deckvermögen ist.

Ob Interferenzpigmente also eher transparent oder eher deckend sind, lässt sich über Helligkeitswerte L* von Beschichtungen, welche die Interferenzpigmente enthalten, auf Schwarz/Weiß-Lackkarten bestimmen. Die Messungen erfolgen im CIEL*a*b*-Farbraum mittels eines geeigneten Messgerätes, beispielsweise mit einem ETA-Farbmessgerät FX11 (Spektrometer der STEAG-ETA Optic GmbH, Inc.) Die Messungen werden im Körperfarbenwinkel 45°/90° (Beleuchtungswinkel 45°, Messwinkel 90°) jeweils über der beschichteten schwarzen und weißen Lackkarte ausgeführt. Die jeweils ermittelten L*-Werte werden in die folgende Gleichung eingefügt:

$$\Delta L = (L^*_{45/90/weiß} - L^*_{45/90/schwarz})$$

(Ermittlung des Deckvermögens DV nach Hofmeister (Colorimetric evaluation of pearlescent pigments, Congress "Mondial Coleur 85", Monte Carlo, 1985 nach der Gleichung DV= $100/(L^*_{45/90/weiß} - L^*_{45/90/schwarz})$).

(Für die Messungen gemäß der vorliegenden Erfindung wird jeweils eine Pigmentdispersion mit einem Gewichtsanteil von 1,65% Pigment in NC-Acryllack (Merck- Artikel-Nr. 270046) luftblasenfrei präpariert und mit einer 500 μm Spaltrakel auf eine übliche Schwarz/Weiß-Karte gezogen und getrocknet. Das Pigment ist in der getrockneten Schicht in einer Konzentration von 13 Masseprozent enthalten (PMK: 13%). Die Messung der L*-Werte erfolgt mit einem ETA-Farbmessgerät FX11 der Firma STEGA ETA-Optic GmbH, Inc., bei einem Beleuchtungswinkel von 45° und einem Messwinkel von 90°.)

Die erfindungsgemäßen nichtmetallischen, elektrisch leitfähigen Interferenzpigmente weisen ΔL-Werte im Bereich von kleiner als 10 auf, vorzugsweise von ≤ 5, die nach dem vorab beschriebenen Verfahren ermittelt werden. In diesem ΔL-Bereich weisen die erfindungsgemäßen Interferenzpigmente eine hohe elektrische Leitfähigkeit auf, bei der der spezifische Pulverwiderstand der Pigmente kleiner ist als $1 \times 10^6$ Ohm*cm, bevorzugt kleiner als $1 \times 10^4$ Ohm*cm, und insbesondere im Bereich von 10 bis 1000 Ohm*cm, besonders bevorzugt im Bereich von 10 bis 100 Ohm*cm, liegt. Diese hohe elektrische Leitfähigkeit ist mit der elektrischen Leitfähigkeit von (leitfähigen) Metallen oder Pigmenten mit (leitfähigen) Metallschichten vergleichbar bzw. übertrifft diese sogar und kann mit geometrischen Schichtdicken der äußeren, kristallinen Kohlenstoff enthaltenden Schicht auf den Pigmenten erzielt werden, die lediglich im Bereich von 1 bis 5 nm liegen. Der Gewichtsanteil dieser äußersten, kristallinen Kohlenstoff enthaltenden Schicht beträgt dabei 0,5 bis 5 Gew. %, insbesondere 1 bis 3 Gew.%, bezogen auf das Gewicht des erfindungsgemäßen Interferenzpigmentes.

Die erfindungsgemäßen Pigmente, deren ΔL-Werte im Bereich von kleiner als 10, insbesondere von 1 bis 5, liegen, weisen einen hohen metallischen Glanz sowie eine intensive silberne oder goldene Interferenzfarbe auf und verfügen über ein sehr gutes Deckvermögen, so dass Beschichtungen, die aus Bindemitteln, Lösemitteln und den erfindungsgemäßen Pigmenten auf übliche Schwarz/Weiß-Testlackkarten aufgebracht und getrocknet werden, sowohl auf der weißen wie auf der schwarzen Lackkarte eine gleichmäßige, gleichfarbige, metallisch anmutende Optik von hohem ästhetischen Wert aufweisen, die eine Beschichtung mit Metalleffektpigmenten simuliert.

Die äußerste, kristallinen Kohlenstoff enthaltende Schicht der Pigmente ist trotz der geringen Schichtdicke stabil und abriebfest und ist kompakt ausgebildet, so dass auch bei mechanischer Beanspruchung der Pigmente nicht mit Qualitätsverlusten gerechnet werden muss.

Sowohl im optischen Erscheinungsbild als auch in der elektrischen Leitfähigkeit lassen Beschichtungen, die die erfindungsgemäßen nichtmetallischen Effektpigmente als einzige Pigmente enthalten, auf eine alleinige Pigmentierung mit elektrisch leitfähigen Metalleffektpigmenten schließen. Die erfindungsgemäßen Pigmente können daher in allen Anwendungen eingesetzt werden, die ein metallisches Erscheinungsbild des Anwendungsmediums sowie eine hohe elektrische Leitfähigkeit desselben erfordern, ohne dass die Nachteile bei der Herstellung, Verarbeitung und dem Gebrauch von Metalleffektpigmenten in Kauf genommen werden müssen.

Gegenstand der vorliegenden Erfindung ist auch ein Verfahren zur Herstellung der genannten nichtmetallischen, elektrisch leitfähigen Interferenzpigmente, bei dem plättchenförmige Trägerteilchen, welche mit einer oder mehreren aufeinanderfolgenden Schichten aus einem farblosen Material mit einer Brechzahl n im Bereich von $n \geq 1,8$ mit einer geometrischen Gesamtschichtdicke von höchstens 70 nm beschichtet sind und eine Teilchengröße mit einem volumengewichteten $d_{90}$-Wert von < 25 μm aufweisen, in einem Reaktor in einem Trägergasstrom unter Zufuhr einer gasförmigen, Kohlenstoff haltigen Verbindung durch pyrolytische Zersetzung der Kohlenstoff haltigen Verbindung mit einer äußersten Schicht beschichtet werden, die zu mindestens 95 Gew.%, bezogen auf das Gewicht dieser Schicht, aus Kohlenstoff besteht und kristallinen Kohlenstoff in Form von Graphit und/oder Graphen enthält und mit einer geometrischen Schichtdicke im Bereich von 0.5 bis 5 nm aufgebracht wird, wobei als gasförmige, Kohlenstoff enthaltende Verbindung Aceton, Ethin oder 2-Methyl 3-butinol-2 eingesetzt wird, gemäß Anspruch 10.

Als partikuläre Ausgangsprodukte für das erfindungsgemäße Verfahren werden die vorab beschriebenen beschichteten plättchenförmigen Trägerpartikel eingesetzt. Dabei kommen alle Träger- und Schichtmaterialien in Frage, die vorab bereits beschrieben wurden.

Die mit einer oder mehreren hochbrechenden Schichten beschichteten Trägermaterialien sind kommerziell verfügbar. Da es sich in den meisten Fällen und vorzugsweise um herkömmliche Interferenzpigmente handelt, können solche Pigmente von den meisten Herstellern bereits in der entsprechenden Größensortierung bezogen werden. Als gut geeignet haben sich beispielsweise die unter den Bezeichnungen Iriodin® 111, Iriodin® 119 oder Xirallic® Micro Silver von der Firma Merck KGaA, Deutschland, angebotenen Effektpigmente erwiesen. Anderenfalls können und müssen auch handelsübliche Interferenzpigmente noch Mahl- und/oder Klassierprozessen unterzogen werden, bevor sie in das erfindungsgemäße Verfahren eingebracht werden, weil sowohl die Teilchengröße als auch der hohe Feinkornanteil maßgeblich für die Produkteigenschaften der erfindungsgemäßen Pigmente sind.

Die genannten Trägerpartikel können jedoch auch vor der Beschichtung mit der äußersten, kristallinen Kohlenstoff enthaltenden Schicht mittels der üblichen, für Effektpigmente allgemein gebräuchlichen Beschichtungsverfahren mit einer oder mehreren hochbrechenden Schichten beschichtet werden. Dabei können sowohl nasschemische als auch CVD, PVD oder Sol/Gel-Verfahren eingesetzt werden, die alle in der Beschichtung von Effektpigmenten gewöhnlicherweise zum Einsatz kommen. Wegen der einfachen Durchführbarkeit des Beschichtungsverfahrens und aus Kostengründen ist jedoch der Einsatz nasschemischer Verfahren mit anorganischen Ausgangsstoffen bevorzugt. Diese werden im Anschluss kurz erläutert. Alle anderen genannten Verfahren sind dem Fachmann ebenso geläufig und bedürfen keiner weiteren Erläuterung.

Die Herstellung von Interferenzpigmenten, die auf einem Träger zumindest mit einer Schicht aus $TiO_2$ beschichtet sind, erfolgt nach den üblichen Verfahren zur Herstellung von Interferenzpigmenten mittels vorzugsweise nasschemischer Verfahren. Diese sind beispielsweise in den Druckschriften DE 14 67 468, DE 19 59 998, DE 20 09 566, DE 22 14 545, DE 22 15 191, DE 22 44 298, DE 23 13 331, DE 25 22 572, DE 31 37 808, DE 31 37 809, DE 31 51 355, DE 32 11 602 und DE 32 35 017 beschrieben.

Dazu werden die Substratplättchen in Wasser suspendiert. Das Aufbringen einer $TiO_2$-Schicht erfolgt dabei vorzugsweise analog zu dem in US 3,553,001 beschriebenen Verfahren. Dabei wird eine wässrige Titansalzlösung langsam zu einer Suspension des zu beschichtenden Pigmentes gegeben, die Suspension auf 50 bis 100 °C erhitzt und der pH-Wert im Bereich von 0,5 bis 5,0 durch gleichzeitige Zugabe einer Base, beispielsweise einer wässrigen Ammoniumhydroxidlösung oder einer wässrigen Alkalihydroxidlösung, nahezu konstant gehalten. Wenn die gewünschte $TiO_2$-Schichtdicke auf den Pigmentplättchen erreicht ist, wird die Zugabe der Titansalzlösung und der Base gestoppt. Da die Zugabe der Titansalzlösung so langsam erfolgt, dass eine quasi vollständige Abscheidung des Hydrolyseproduktes auf den Pigmentplättchen erfolgt, kommt es praktisch nicht zu Nebenfällungen. Das Verfahren ist als Titrationsverfahren bekannt.

Falls auch Schichten aus niedrig brechenden Materialien aufgebracht werden sollen, was allerdings nicht bevorzugt ist, wird hier beispielhaft das Aufbringen einer SiO$_2$-Schicht erläutert:
Für die Aufbringung einer SiO$_2$-Schicht wird in der Regel eine Natrium- oder Kaliumwasserglaslösung eingesetzt. Die Ausfällung einer Siliziumdioxid- bzw. Siliziumdioxidhydratschicht erfolgt bei einem pH-Wert im Bereich von 6 bis 10, vorzugsweise von 7 bis 9.

Die Aufarbeitung der beschichteten Trägerteilchen erfolgt wie üblich für Interferenzpigmente in der Regel durch Waschen, Trocknen und vorzugsweise auch Kalzinieren der beschichteten Trägerteilchen. Erforderlichenfalls können sich Mahl- und/oder Klassierschritte anschließen.

Die vorab beschichteten plättchenförmigen Trägerteilchen werden dann in den Reaktor eingebracht.

Als Reaktoren, in denen das erfindungsgemäße Verfahren durchgeführt werden kann, sind sowohl Drehrohröfen als auch Wirbelbettreaktoren geeignet, wobei die letzteren bevorzugt eingesetzt werden. Das Beschichtungsverfahren wird in einem Trägergasstrom durchgeführt.
Als Trägergas werden Inertgase, synthetische Luft oder Formiergas eingesetzt. Beispielhaft für Inertgase können Stickstoff und Argon genannt werden, wobei Stickstoff bevorzugt eingesetzt wird.

Dem Trägergas wird eine gasförmige, Kohlenstoff haltige Verbindung zugeführt. Diese besteht vorzugsweise aus leicht verdampfbaren Kohlenwasserstoffen, die neben Kohlenstoff lediglich Wasserstoff sowie gegebenenfalls auch Sauerstoff enthalten. Als Beispiele können Aceton, Ethin oder 2-Methyl-3-butinol-2 genannt werden. Bevorzugt werden Aceton und 2-Methyl-3-butinol-2 eingesetzt, wobei Aceton insbesondere bevorzugt ist. Das Trägergas kann jedoch auch selbst aus der gasförmigen, Kohlenstoff haltigen Verbindung bestehen, die in diesem Falle sowohl die Funktion des Trägergases als auch die der gasförmigen, Kohlenstoff haltigen Verbindung übernimmt.

Für den Erfolg des erfindungsgemäßen Verfahren ist es von besonderer Bedeutung, dass die plättchenförmigen Trägerteilchen in dem Reaktor während der Reaktion in Bewegung sind und in Bewegung gehalten werden. Dazu müssen die plättchenförmigen Trägerteilchen während der Reaktion hinreiched fluidisiert werden. Falls die Fluidisierung der Trägerteilchen durch den Trägergasstrom und die gasförmige, Kohlenstoff haltige Verbindung nicht ausreichen sollte, sind daher geeignete Verwirbelungsapparaturen wie Vibrations- und/oder Rüttelvorrichtungen einzusetzen.

Im Anschluss an eine ausreichende Fluidisierung der plättchenförmigen Trägerteilchen im Reaktor wird die Reaktionstemperatur eingestellt. Die Temperatur während des Beschichtungsverfahrens wird im Reaktor so eingestellt, dass die Kohlenstoff haltige, gasförmige Verbindung pyrolytisch zersetzt wird. Sie liegt erfindungsgemäß im Bereich von 400°C bis 900°C, bevorzugt im Bereich von 500°C bis 700°C und wird abhängig von der Art der zu zersetzenden, Kohlenstoff haltigen Verbindung eingestellt.

Die gasförmige, Kohlenstoff haltige Verbindung kann dem Reaktor wahlweise vor oder nach Erreichung der Reaktionstemperatur oder während der Einstellung der Reaktionstemperatur zugeführt werden. Bevorzugt ist eine Zufuhr vor dem Erreichen der erforderlichen Reaktionstemperatur. Insbesondere bevorzugt ist es, wenn die gasförmige, Kohlenstoff haltige Verbindung und das Trägergas vor der Zufuhr in den Reaktor bereits in einem geeigneten Verhältnis als Gemisch vorliegen und dem Reaktor gemeinsam zugeführt werden. Die Stoffmenge an zugeführter Kohlenstoff haltiger Verbindung kann dabei über die Temperatur und/oder den Dampfdruck der entsprechenden gasförmigen Verbindung gesteuert werden. Nach Beendigung der pyrolytischen Reaktion und Erreichen der gewünschten Schichtdicke der äußersten Schicht wird die Kohlenstoffquelle abgestellt.

Die Reaktionszeit beträgt etwa 5 bis 200 Minuten, vorzugsweise 10 bis 150 Minuten. Innerhalb dieser Reaktionszeit wird auf den eingesetzten, vorbeschichteten plättchenförmigen Trägerteilchen eine kompakte, geschlossene äußerste Schicht aufgebracht, die zu mindestens 95 Gew.%, vorzugsweise mindestens 98 Gew. %, bezogen auf das Gewicht dieser Schicht, aus Kohlenstoff besteht und kristallinen Kohlenstoff in Form von Graphen und/oder Graphit enthält. Die Schichtdicke dieser Schicht wächst während der Reaktion stetig an und kann durch die gewählte Dauer der Reaktion gesteuert werden. Mit der Schichtdicke der äußersten Schicht steigt die elektrische Leitfähigkeit sowie das Deckvermögen der resultierenden Pigmente an.

Da bei Schichtdicken der äußersten Schicht von größer als 5 nm sowohl der Glanz als auch die metallähnliche Interferenzfarbe der resultierenden Pigmente in Mitleidenschaft gezogen wird, wird die geometrische Schichtdicke der äußersten, kristallinen Kohlenstoff enthaltenden Schicht im erfindungsgemäßen Verfahren auf Werte im Bereich von lediglich 0,5 bis 5 nm, vorzugsweise auf 1 bis 3 nm, eingestellt.

Nach der thermischen Behandlung werden die erhaltenen Interferenzpigmente abgekühlt und klassiert. Falls erforderlich, können vor oder nach dem Klassieren auch noch ein oder mehrere Mahlprozesse zur weiteren Vereinzelung der erhaltenen Pigmente durchgeführt werden.

Das erfindungsgemäße Verfahren kann sowohl als Batchverfahren als auch als kontinuierliches Verfahren durchgeführt werden. Es ermöglicht darüber hinaus einen hohen Durchsatz von Pigmenten in einer kurzen Zeitspanne und ist daher auch in ökonomischer Hinsicht attraktiv.

Gegenstand der vorliegenden Erfindung ist auch die Verwendung der vorab beschriebenen, erfindungsgemäßen Pigmente in Farben, Lacken, Druckfarben, Beschichtungszusammensetzungen, Sicherheitsanwendungen, Kunststoffen, keramischen Materialien, Gläsern, Papier, Folien, im Wärmeschutz, in Fußbodenbelägen, zur Lasermarkierung, in Trockenpräparaten und Pigmentpräparationen.

Bedingt durch ihr metallisches Erscheinungsbild mit hohem Glanz und silberner oder goldener Interferenzfarbe sowie das außerordentlich hohe Deckvermögen sind die erfindungsgemäßen Pigmente gut geeignet, lediglich auf Grund ihrer Farbeigenschaften zur Pigmentierung von Anwendungsmedien der vorab genannten Art eingesetzt zu werden. Dabei werden sie in der gleichen Weise wie übliche Interferenzpigmente eingesetzt. Besonders vorteilhaft ist jedoch, dass sie neben den attraktiven optischen Eigenschaften auch über eine hohe elektrische Leitfähigkeit verfügen, die sie insbesondere für den Einsatz in technischen Anwendungen, die elektrisch leitfähige Beschichtungen erfordern, geeignet machen. So eignen sie sich insbesondere für die Herstellung metallisch aussehender, elektrisch leitfähiger Beschichtungen auf verschiedenen Untergründen, die mittels Lackier- oder Druckverfahren oder anderer üblicher Beschichtungsverfahren hergestellt werden können. Da die erfindungsgemäßen Pigmente auch in äußerst dünnen Beschichtungen noch eine gute elektrische Leitfähigkeit aufweisen, können damit sehr dünne metallisch anmutende Beschichtungen, insbesondere Drucke, mit hohem Glanz und sehr gutem Deckvermögen erhalten werden, die darüber hinaus über eine erhebliche elektrische Leitfähigkeit verfügen. Damit können für leitfähige Pigmente Einsatzmöglichkeiten gefunden werden, die mit den bisher zur Verfügung stehenden Pigmenten des Standes der Technik nicht zugänglich waren, beispielsweise metallfarbene Lack- und Druckschichten mit Widerständen im antistatischen bis elektrisch ableitfähigen Bereich, also im Bereich von $10^9$ Ohm bis $10^4$ Ohm, gemessen als spezifischer Oberflächenwiderstand der entsprechenden Lack- oder Druckschicht.

Mit den erfindungsgemäßen nichtmetallischen, elektrisch leitfähigen Pigmenten können beispielsweise in Massendruckverfahren wie dem Tiefdruck oder dem Flexodruck, die nur sehr geringe Druckschichtdicken von wenigen Mikrometern Dicke ergeben, bei hoher Linienzahl und hoher Auflösung, z.B. bei 60 L/cm, den Bedruckstoff vollständig deckende Volltonflächen erhalten werden. Eine solche Flächendeckung wäre mit gröberen Pigmentpartikeln selbst bei gleichem Pigmentschichtaufbau nicht erzielbar. Dadurch wird es möglich, mit den üblicherweise für den Verpackungsdruck eingesetzten Verfahren auf hellen wie auf dunklen Bedruckstoffen optisch metallisch anmutende, deckende, elektrisch leitfähige Beschichtungen auf Papieren, Kartonagen oder Folien aufzubringen. Solche Verpackungsmaterialien sind von hohem ästhetischen Wert und besitzen gleichzeitig elektrisch ableitende Eigenschaften, die sie als Mittel der Wahl für die Verpackung elektronischer Güter, die gegen elektromagnetische Entladung geschützt werden müssen, erscheinen lassen. Beschichtungen dieser Art lassen sich selbstverständlich auch als Primer- oder Grundierschichten auf verschiedenste Substrate, wie beispielsweise auf Kunststoffteile von Autokarosserien, aufbringen und anschließend mit weiteren Schichten oder Motiven überschichten bzw. überdrucken.

Die Feinteiligkeit der erfindungsgemäßen Interferenzpigmente macht sehr geringe Schichtdicken des jeweiligen Anwendungsmediums, beispielsweise im Bereich von 2-20 μm, möglich, ohne dass beim Deckvermögen oder der elektrischen Leitfähigkeit der Beschichtung qualitative Abstriche gemacht werden müssen.

Gut geeignet sind die erfindungsgemäßen Pigmente auch in Sicherheitsanwendungen, insbesondere im Sicherheitsdruck. Sie können dort zur Erzeugung verdeckter Sicherheitsmerkmale eingesetzt werden, die mit bloßem Auge unsichtbar sind, aber mit entsprechenden Detektoren ausgelesen werden können. So lassen sich mit Hilfe der erfindungsgemäßen Pigmente Druckfarben herstellen, die Druckbilder mit silberner oder goldener Interferenzfarbe, hohem metallischen Glanz und guter elektrischer Leitfähigkeit ergeben. Dabei kann bereits die elektrische Leitfähigkeit als unsichtbares Sicherheitsmerkmal dienen. Besonders gut geeignet sind die erfindungsgemäßen Pigmente jedoch zur Herstellung von Druckbildern, die teilweise mit den erfindungsgemäßen Pigmenten, teilweise mit nicht elektrisch leitfähigen Pigmenten oder Pigmentgemischen gleicher Farbstellung bedruckt werden. Solche Druckbilder ergeben einen einheitlichen Farbeindruck, sind jedoch in Teilbereichen elektrisch leitfähig und in anderen Teilbereichen nicht elektrisch leitfähig, was als verstecktes Sicherheitsmerkmal genutzt werden kann, das über die elektrischen Eigenschaften oder über Wärmebilder ausgelesen werden kann.

Sicherheitsprodukte sind beispielsweise Banknoten, Schecks, Kreditkarten, Aktien, Pässe, Ausweisdokumente, Führerscheine, Eintrittskarten, Wertmarken, Steuermarken etc., um nur einige zu nennen. Diese können beispielsweise mit Barcodes, 2D-Datamatrixcodes, alphanumerischen Zeichen oder Logos versehen sein, die die elektrisch leitfähigen, metallisch erscheinenden Interferenzpigmente gemäß der vorliegenden Erfindung enthalten.

Beim Einsatz der Pigmente in Lacken und Farben sind alle dem Fachmann bekannten Anwendungsbereiche möglich, wie z.B. Pulverlacke, Automobillacke, Druckfarben für den Tief-, Offset-, Sieb-, oder Flexodruck sowie Lacke in Außenanwendungen. Für die Herstellung von Druckfarben ist eine Vielzahl von Bindern, insbesondere wasserlösliche, aber auch lösemittelhaltige Typen, z.B. auf der Basis von Acrylaten, Methacrylaten, Polyestern, Polyurethanen, Nitrocellulose, Ethylcellulose, Polyamid, Polyvinylbutyrat, Phenolharzen, Melaminharzen, Maleinharzen, Stärke oder Polyvinylalkohol geeignet. Bei den Lacken kann es sich um Wasser- oder lösemittelbasierte Lacke handeln, wobei die Auswahl der Lackbestandteile dem Allgemeinwissen des Fachmannes unterliegt.

Die erfindungsgemäßen Pigmente können ebenso vorteilhaft zur Herstellung von elektrisch leitfähigen Kunststoffen und Folien eingesetzt werden, und zwar für alle dem Fachmann bekannten Anwendungen, die eine elektrische Leitfähigkeit erfordern. Als Kunststoffe eignen sich dabei alle gängigen Kunststoffe, beispielsweise Duromere und thermoplastische Kunststoffe. Die erfindungsgemäßen Pigmente unterliegen dabei denselben Bedingungen wie übliche Perlglanz- bzw. Interferenzpigmente. Besonderheiten der Einbringung in Kunststoffe sind daher beispielsweise in R. Glausch, M. Kieser, R. Maisch, G. Pfaff, J. Weitzel, Perlglanzpigmente, Curt Vincentz Verlag, 1996, 83 ff., beschrieben. Die erfindungsgemäßen Pigmente sind auch zur Herstellung von fließfähigen Pigmentpräparationen und Trockenpräparaten geeignet, die ein oder mehrere erfindungsgemäße Pigmente, gegebenenfalls weitere Pigmente bzw. Farbmittel, Bindemittel und optional ein oder mehrere Additive enthalten. Unter Trockenpräparaten sind auch Präparate zu verstehen, die 0 bis 8 Gew.-%, vorzugsweise 2 bis 8 Gew.-%, insbesondere 3 bis 6 Gew.-%, an Wasser und/oder eines Lösemittels oder Lösemittelgemisches enthalten. Die Trockenpräparate liegen vorzugsweise als Pearlets, Pellets, Granulate, Chips, Würstchen oder Briketts vor und weisen Teilchengrößen von etwa 0,2 bis 80 mm auf.

Bedingt durch ihre elektrisch leitenden und metallisch erscheinenden Farbeigenschaften lassen sich die erfindungsgemäßen Interferenzpigmente mit besonderem Vorteil beispielsweise in antistatisch ausgerüsteten dekorativen Oberflächen einsetzen. Neben den durch den Herstellungsprozess gut steuerbaren elektrischen Eigenschaften sind die erfindungsgemäßen Interferenzpigmente von sehr gutem Deckvermögen, hohem Glanz und metallischer Optik, so dass sie zur Farbgebung für ansonsten transparente, dielektrische Schichten in den vorab beschriebenen Anwendungsbereichen optimal verwendbar sind und nicht mit absorbierenden Farbmitteln oder anderen Effektpigmenten gemischt werden müssen, um dem Anwendungsmedium neben den leitenden Eigenschaften auch ein ansprechendes metallisch anmutendes Äußeres zu verleihen.

Die erfindungsgemäßen Interferenzpigmente eignen sich auch in besonderer Weise zur Lasermarkierung. Wenn sie Lacken, Drucken oder Kunststoffartikeln zugefügt werden, kann die äußerste, kristallinen Kohlenstoff enthaltende Schicht auf den Pigmenten durch Laserbeschuss ganz oder teilweise entfernt oder in $CO_2$ überführt werden, wodurch im Anwendungsmedium optisch attraktive Lasermarkierungen erhalten werden.

Die Konzentration der erfindungsgemäßen Interferenzpigmente im jeweiligen Anwendungsmedium ist von den dort gewünschten Eigenschaften bezüglich Farbgebung und elektrischer Leitfähigkeit abhängig und kann vom Fachmann jeweils auf der Basis üblicher Rezepturen gewählt werden.

Obwohl die erfindungsgemäßen Interferenzpigmente über attraktive optische und elektrisch leitende Eigenschaften verfügen und damit als alleinige Effektpigmente in verschiedensten Anwendungen einsetzbar sind, ist es selbstverständlich möglich und je nach Anwendungszweck auch vorteilhaft, sie bei Bedarf mit organischen und/oder anorganischen Farbmitteln (insbesondere mit Weiß- oder Buntpigmenten) und/oder anderen, elektrisch leitfähigen Materialien und/oder anderen, nicht elektrisch leitfähigen Effektpigmenten zu mischen oder gemeinsam mit diesen in einer Anwendung, beispielsweise einer Beschichtung, einzusetzen.

Darüber hinaus können sie auch untereinander in verschiedenen Farbstellungen oder mit unterschiedlich eingestellter elektrischer Leitfähigkeit gemischt werden, wenn sich daraus für die Anwendung Vorteile ergeben.

Die Mischungsverhältnisse bei allen vorab beschriebenen Mischungen sind nicht limitiert, solange die vorteilhaften Eigenschaften der erfindungsgemäßen Pigmente durch die zugemischten Fremdpigmente nicht negativ beeinflusst werden. Die erfindungsgemäßen Pigmente können in jedem Verhältnis mit anwendungsüblichen Zusatzstoffen, Füllstoffen und/oder Bindemittelsystemen gemischt werden.

Die erfindungsgemäßen Pigmente weisen attraktive silberne oder goldene Interferenzfarben von hoher Farbstärke sowie ein besonders hohes Deckvermögen auf und verfügen über sehr gute elektrisch leitende Eigenschaften. Neben üblichen Anwendungen leitfähiger Pigmente eignen sie sich daher insbesondere für die Erzeugung von Sicherheitsmerkmalen in Sicherheitsanwendungen und zur Lasermarkierung.

Fig. 1: zeigt ein Diagramm zur Charakterisierung von Kohlenstoff mit Hilfe der Raman Spektroskopie nach A.C. Ferrari und J. Robertson, Universität Cambridge

Fig. 2: zeigt die Perkolationskurve für Lackschichten mit einem Pigment gemäß Beispiel 1

Fig. 3: zeigt die Perkolationskurve für Lackschichten mit einem Pigment gemäß Beispiel 3B

Die vorliegende Erfindung soll nachfolgend an Hand von Beispielen erläutert, aber nicht auf diese beschränkt werden.

Beispiele:

Beispiel 1:

In allen Erfindungsbeispielen wird eine Wirbelbettapparatur als Reaktor verwendet, die einen senkrechten, zylinderförmigen Reaktionsraum umfasst, welcher am unteren Ende mit einem Anströmboden und am oberen Ende mit einem Filtersystem zur Zurückhaltung der Pigmente ausgerüstet ist. Die Wirbelbettapparatur ist temperierbar und mit einer Vibrationsvorrichtung versehen. Die Fluidisierung der Pigmente erfolgt über die Anströmung der Pigmentschüttung

EP 3 230 384 B1

mit einem Trägergas sowie bei Bedarf zusätzlich über den Einsatz der Vibrationsvorrichtung. Die Reaktionstemperatur liegt jeweils im Bereich von 500°C bis 700°C. Die verdampfbare Kohlenstoff enthaltende Verbindung (Kohlenstoff Precursor) wird dem Reaktor in einer Mischung mit dem Trägergas zugeführt.
Die Reaktionszeit beträgt zwischen 30 und 120 Minuten.

500 g eines Interferenzpigmentes mit silberner Interferenzfarbe (Iriodin® 111 Rutile Fine Satin, Teilchengröße 1-15 $\mu$m, $d_{90}$ 10,5 $\mu$m, $d_{50}$ 6 $\mu$m, volumengewichtet, $TiO_2$ auf Glimmer, Merck KGaA, Deutschland) werden in der Wirbelbettapparatur vorgelegt. Das Trägergas Stickstoff wird durch eine Gaswaschflasche mit Aceton geleitet und auf diese Weise mit Aceton gesättigt. Das gasförmige Stickstoff/Aceton-Gemisch wird in die Wirbelbettapparatur geleitet und die Pigmente werden durch den Trägergasstrom sowie bei Bedarf durch Zuschalten der Vibrationsvorrichtung fluidisiert. Nach dem Erreichen der Reaktionstemperatur im Bereich von 500°C bis 700°C werden in mehreren Ansätzen nach Reaktionszeiten von 30, 60, 90 und 120 Minuten die erhaltenen Pigmente entnommen und auf ihren Kohlenstoffanteil, den spezifischen Pulverwiderstand sowie den $\Delta$L-Wert hin untersucht. Das Ergebnis ist in Tabelle 1 dargestellt:

Tabelle 1:

| T(Reaktionszeit) [min] | spez. Pulverwiderstand [Ohm*cm] | Massenanteil C [%] | $\Delta$L-Wert |
|---|---|---|---|
| 0 | > $10^9$ | 0,0 | 22,5 |
| 30 | 9x$10^5$ | 0,5 | 4,6 |
| 60 | 358,3 | 0,9 | 3,3 |
| 90 | 321,5 | 1,2 | 2,6 |
| 120 | 30,0 | 2,2 | 1,0 |

Die erhaltenen Pigmente zeigen eine silberne Interferenzfarbe, einen hohen metallischen Glanz und mit zunehmendem Kohlenstoffanteil ein stark steigendes Deckvermögen. Bereits bei einem Kohlenstoffanteil von lediglich 0,5 Gew. % können silberfarbene Interferenzpigmente mit hohem Deckvermögen und guter elektrischer Leitfähigkeit erhalten werden.

Beispiel 2:

500 g des Interferenzpigmentes aus Beispiel 1 (Iriodin® 111 Rutile Fine Satin) werden in der Wirbelbettapparatur vorgelegt. Das Trägergas Stickstoff wird durch eine im Bereich von 30 bis 90°C temperierte Gaswaschflasche mit Aceton oder 2-Methyl-3-butin-2-ol geleitet und auf diese Weise jeweils mit letzteren angereichert. Das gasförmige Stickstoff/Aceton- oder Stickstoff/2-Methyl-3-butin-2-ol Gemisch wird in die Wirbelbettapparatur geleitet und die Pigmente werden durch den Trägergasstrom sowie bei Bedarf durch Zuschalten der Vibrationsvorrichtung fluidisiert. Die Reaktionstemperatur wird auf 500°C bis 700°C eingestellt. Es werden Pigmentproben vor Beginn der Reaktion und nach 120 Minuten bzw. nach 40 Minuten entnommen und auf ihren Kohlenstoffanteil, den spezifischen Pulverwiderstand sowie den $\Delta$L-Wert hin untersucht. Das Ergebnis ist in Tabelle 2 dargestellt:

Tabelle 2:

| T(Reaktionszeit) [min] | C-Verbindung | spez. Pulverwider-[Ohm*cm] | Massenanteil C [%] | $\Delta$L-Wert |
|---|---|---|---|---|
| 0 | | > $10^9$ | 0,0 | 22,5 |
| 120 | Aceton | 30 | 2,2 | 1,0 |
| 40 | 2Methyl3butinol | 604 | 3,0 | 1,8 |

Wie aus Tabelle 2 ersichtlich ist, sind metallisch glänzende silberfarbene Interferenzpigmente mit hohem Deckvermögen und guter elektrischer Leitfähigkeit durch pyrolytische Zersetzung verschiedener Kohlenstoff haltiger Verbindungen im erfindungsgemäßen Verfahren erhältlich.

Die in den Beispielen 1 und 2 erhaltenen Pigmente werden durch Analyse der Kohlenstoffgehalte, Messung der Koloristik an Lackabstrichkarten, TEM-Aufnahmen, Thermodifferentialanalyse, Ramanspektroskopie und Messungen des elektrischen Widerstandes charakterisiert. Die Auswertung des Kohlenstoffgehaltes ergibt Werte zwischen 0,5 und 3 Gew.%, bezogen auf das Gewicht der Pigmente. In den TEM-Aufnahmen sind geschlossene Kohlenstoffschichten mit einer Dicke von 1-3 nm, was etwa 3-9 Graphitlagen entspricht, auf der Oberfläche der Pigmente zu erkennen. Die Ramanspektren zeigen das Vorliegen von im Wesentlichen graphitischem Kohlenstoff. Es werden zusätzlich die spezifischen Pulverwiderstände der Pigmente sowie die koloristischen Werte anhand von Schwarz/Weiß-Lackkarten bestimmt. Aus den L-Werten der Schwarz/Weiß-Lackkarten wird der Helligkeitskontrast $\Delta$L errechnet. Es zeigt sich, dass der Helligkeitskontrast $\Delta$L mit dem Kohlenstoffgehalt der Pigmente korreliert.

Beispiel 3:

Jeweils 1 kg eines silbernen Interferenzpigmentes (A: Iriodin® 119 Polar White, Teilchengröße 5-25 $\mu$m, $d_{90}$ 19 $\mu$m, $d_{50}$ 10 $\mu$m, volumengewichtet, $TiO_2$ auf Glimmer, und B: Xirallic® T61-10 WNT Micro Silver, Teilchengröße $\leq$ 20 $\mu$m, $TiO_2$ auf Aluminiumdioxid, werden nach dem in Beispiel 1 beschriebenen Verfahren bei Reaktionszeiten von jeweils 120 Minuten mit einer kristallinen Kohlenstoff haltigen Schicht beschichtet. Die Ergebnisse sind in Tabelle 3 dargestellt.

Tabelle 3:

| T(Reaktionszeit) [min] | spez. Pulverwiderstand [Ohm*cm] | Massenanteil C [%] | $\Delta$L-Wert |
|---|---|---|---|
| **A** | | | |
| 0 | $> 10^9$ | 0,0 | 36,6 |
| 120 | 61,3 | 1,4 | 2,4 |
| **B** | | | |
| 0 | $> 10^9$ | 0,0 | 30,4 |
| 120 | 29,9 | 1,2 | 5,7 |

Es werden in jedem Falle silberfarbene Pigmente erhalten, die einen hohen metallischen Glanz, ein hohes Deckvermögen sowie eine hohe elektrische Leitfähigkeit aufweisen.

Beispiel 4:

Anwendungsbeispiel Lack

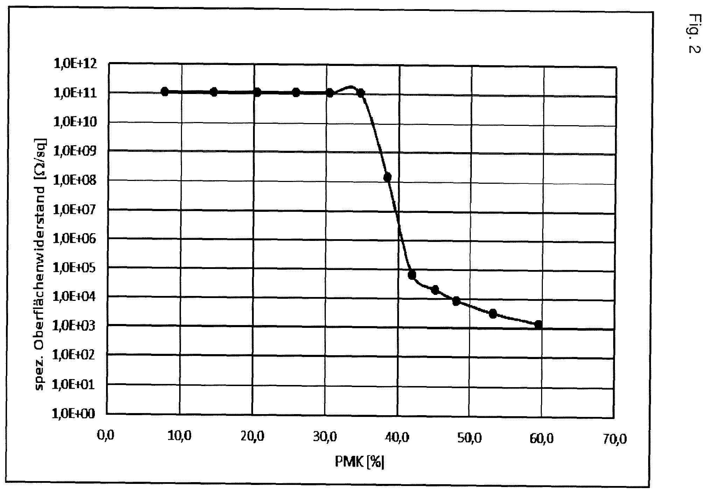

Ein gemäß Beispiel 1 hergestelltes Pigment (Iriodin® 111 Rutile Fine Satin mit einem Kohlenstoffanteil von 2,2 Gew.%) wird in unterschiedlichen Gewichtsteilen in NC-Lack dispergiert (12 % Collodium/Butylacrylat in einem Lösemittelgemisch). Mit der jeweiligen Lackzubereitung werden PET-Folien beschichtet. Die Pigmentmassekonzentration (PMK) der Pigmente in der trockenen Lackschicht variiert zwischen 8 und 60 %, die Schichtdicke der Lackschicht beträgt jeweils 40 $\mu$m. Die erhaltenen Lackschichten sind jeweils deckend und zeigen eine attraktive metallisch silberne Farbe.
Nach Trocknung der Lackschichten wird mit Hilfe einer Federzungenelektrode (1 cm Elektrodenabstand, Länge 10 cm) der jeweilige Oberflächenwiderstand der Lackschicht bei einer Feldstärke von 100 V/cm gemessen und spezifische Oberflächenwiderstände, bezogen auf eine quadratische Fläche, errechnet. Auf diese Weise wird die Perkolationskurve für das Pigment erstellt. Die Ergebnisse sind in Figur 2 dargestellt. Der bei einer Pigmentmassekonzentration (PMK) von 60% erhaltene spezifische Oberflächenwiderstand von 1,4 KOhm stellt einen außerordentlich niedrigen Wert dar, der mit der elektrischen Leitfähigkeit von Graphitteilchen vergleichbar ist. Für die Praxis sind zur antistatischen Ausrüstung von Beschichtungen schon die elektrischen Widerstände ausreichend, die bei einer PMK von 38% erhalten werden. Damit sind die erfindungsgemäßen Pigmente hervorragend für die Anwendung in antistatischen und ableitfähigen Beschichtungen geeignet.

Beispiel 5:

Anwendungsbeispiel Lack

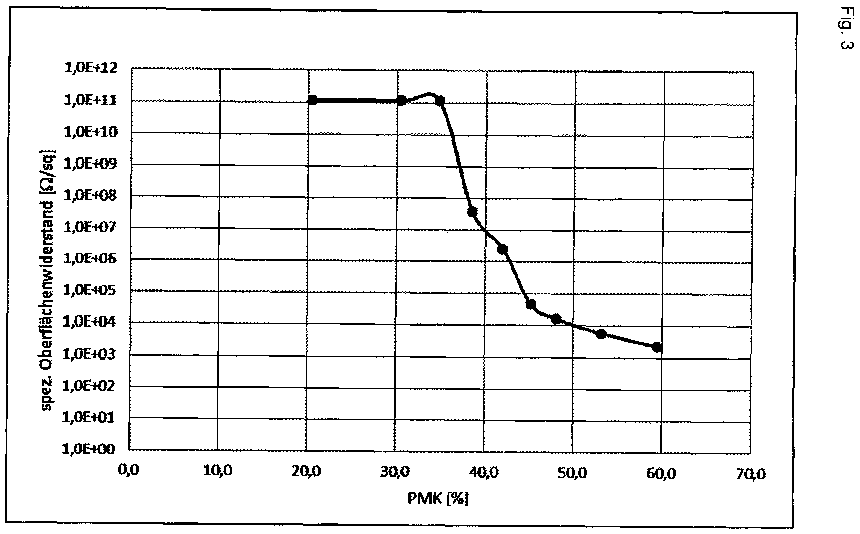

Beispiel 4 wird wiederholt mit der Änderung, dass statt des Pigmentes gemäß Beispiel 1 ein Pigment gemäß Beispiel 3B (Xirallic® T61-10 WNT Micro Silver mit 1,2 Gew. % Kohlenstoffanteil) eingesetzt wird.
Die erhaltenen Perkolationskurve ist in Figur 3 dargestellt. Der bei einer Pigmentmassekonzentration von 60 % erhaltene spezifische Oberflächenwiderstand von 2,2 KOhm ist ebenso mit dem mit Graphitteilchen erzielbaren spezifischen Oberflächenwiderstand von Lackschichten vergleichbar und stellt einen hervorragenden Wert dar.
Die erhaltenen Lackschichten sind jeweils von silberfarbenem Metallglanz und weisen ein hohes Deckvermögen auf.

Beispiel 6:

Anwendungsbeispiel Druckfarbe

Zur Herstellung verschiedenener Druckfarben werden Pigmente aus verschiedenen vorab beschriebenen Beispielen jeweils in eine unpigmentierte, lösemittelhaltige Druckfarbe für den Tiefdruck (NC TOP OPV 00, Feststoffgehalt 28%, Siegwerk Druckfarben AG & Co. KGaA) eingebracht. Die Druckfarben werden nach Einstellung der Viskosität mit einem Lösemittel im Tiefdruck mit einer Rasterwalze mit einer Rasterweite von 60 Linien/cm in der Vollfläche auf gestrichene Papiere mit weißer, schwarzer und dunkelblauer Grundfarbe verdruckt. Die Pigmentmassekonzentration in der trockenen Schicht liegt jeweils bei 62%. Die Drucke werden visuell nach Aussehen, Druckqualität und Deckvermögen beurteilt. Kriterium für das Deckvermögen ist die Unsichtbarkeit der ursprünglichen Papierfarbe nach dem Bedrucken. Zusätzlich werden mit der Federzungenelektrode die Oberflächenwiderstände der Druckschichten bestimmt, die in allen Fällen bei Werten im Bereich von 10 bis 100 KOhm liegen. Die visuellen Ergebnisse sind in Tabelle 4 zusammengestellt.

Tabelle 4:

| Pigment aus Beispiel | Farbe Substrat | visueller Eindruck |
|---|---|---|
| Bsp. 1, 2,2% C | blau | sehr gut |
| Bsp. 1, 2,2% C | weiß | sehr gut |
| Bsp. 1, 2,2% C | schwarz | sehr gut |
| Bsp. 3A, 1,4% C | blau | sehr gut |
| Bsp. 3A, 1,4% C | weiß | sehr gut |
| Bsp. 3A, 1,4% C | schwarz | sehr gut |
| Bsp. 3B, 1,2% C | blau | sehr gut |
| Bsp. 3B, 1,2% C | weiß | sehr gut |
| Bsp. 3B, 1,2% C | schwarz | sehr gut |

Alle erfindungsgemäßen Pigmente ergeben Druckbilder von glänzendem, silberfarbenen Aussehen mit einer glatten Oberfläche und einem homogen erscheinenden Druckbild. Die ursprüngliche Papierfarbe ist in allen Fällen komplett abgedeckt und die Drucke zeigen niedrige elektrische Oberflächenwiderstände. Die Beispiele zeigen, dass sich die erfindungsgemäßen Pigmente in hervorragender Weise für die Herstellung silberfarbener, ableitfähiger Verpackungen eignen.

Vergleichsbeispiel 1:

Es werden Mischungen des silberfarbenen Interferenzpigmentes aus Beispiel 1 (Iriodin® 111 Rutil Fine Satin) mit Carbon Black (Printex L der Fa. Orion Engineered Carbons, Inc.) in der Weise angefertigt, dass die Mischung jeweils den in Tabelle 5 dargestellten Kohlenstoffgehalt aufweist. Von den erhaltenen Mischungen wird jeweils der spezifische Pulverwiderstand gemessen.

Tabelle 5:

| spez. Pulverwiderstand [Ohm*cm] | Massenanteil Carbon Black [%] |
|---|---|
| $> 10^9$ | 0,0 |
| $> 10^9$ | 0,5 |
| $> 10^9$ | 1,0 |
| $> 10^9$ | 1,5 |
| $> 10^9$ | 2,0 |
| $> 10^9$ | 2,5 |

Mit den Carbon Black/Interferenzpigment-Mischungen kann der gewünschte spezifische Pulverwiderstand von kleiner als $1 \times 10^6$ Ohm*cm nicht erreicht werden.

Vergleichsbeispiel 2:

Ein silberfarbenens Interferenzpigment (Iriodin® 100 Silver Pearl, Teilchengröße 10-60 $\mu$m, $d_{90}$ 50 $\mu$m, $d_{50}$ 25

$\mu$m, TiO$_2$ auf Glimmer, Merck KGaA) wird wie in Beispiel 1 beschrieben mit Kohlenstoff beschichtet. Die Reaktionszeit wird im Bereich von 30 bis 120 Minuten variiert. Die Ergebnisse sind in Tabelle 6 dargestellt.

Tabelle 6:

| T(Reaktionszeit) [min] | spez. Pulverwiderstand [Ohm*cm] | Massenanteil C [%] | $\triangle$L-Wert |
|---|---|---|---|
| 0 | $> 10^9$ | 0,0 | 45,9 |
| 30 | 253690 | 0,5 | 26,4 |
| 60 | 1439,4 | 0,8 | 18,6 |
| 120 | 71 | 1,3 | 11,9 |

Die Ergebnisse zeigen, dass mit Pigmentpartikeln, die nicht im erfindungsgemäßen Größenbereich liegen, keine deckenden Pigmente erhalten werden können, auch nicht durch Erhöhung des Kohlenstoffgehaltes.

Vergleichsbeispiel 3:

Silberfarbene Interferenzpigmente (A: Xirallic® Crystal Silver d$_{90}$ 35 $\mu$m, d$_{50}$ 19 $\mu$m, TiO$_2$ auf Aluminiumoxid, und B: Ronastar® Noble Sparks, D$_{90}$ 170 $\mu$m, Produkte der Merck KGaA) werden gemäß Beispiel 1 mit Kohlenstoff beschichtet. Es werden Pigmente mit den in Tabelle 7 dargestellten Eigenschaften erhalten.

Tabelle 7:

| T (Reaktionszeit) [min] | spez. Pulverwiderstand [Ohm*cm] | Massenanteil C [%] | $\triangle$L-Wert |
|---|---|---|---|
| A | | | |
| 0 | $> 10^7$ | 0,0 | 45 |
| 120 | 22,9 | 0,9 | 16,9 |
| B | | | |
| 0 | $> 10^9$ | 0,0 | 68,5 |
| 120 | 270,7 | 0,6 | 45,8 |

Das gemäß Vergleichsbeispiel 3A erhaltene Pigment ist silberfarben und semitransparent, weist also nicht das erforderliche Deckvermögen auf um ein metallähnliches Aussehen einer Beschichtung simulieren zu können. Bei dem in Vergleichsbeispiel 3B erhaltenen Pigment handelt es sich um ein silberfarbenes Pigment mit geringem Deckvermögen und starkem Glitzereffekt.

**Patentansprüche**

1. Nichtmetallische Interferenzpigmente auf der Basis eines plättchenförmigen nichtmetallischen Trägers, wobei die Pigmente eine Teilchengröße mit einem volumengewichteten d$_{90}$-Wert von < 25 $\mu$m aufweisen, der Träger eine Beschichtung aus einer oder mehreren aufeinander folgenden Schichten aus einem farblosen Material mit einer Brechzahl n von n $\geq$ 1,8 mit einer geometrischen Gesamtschichtdicke von höchstens 70 nm aufweist, und wobei die Pigmente eine äußerste Schicht aufweisen, welche eine geometrische Schichtdicke im Bereich von 0,5 bis 5 nm aufweist und zu mindestens 95 Gew.%, bezogen auf das Gewicht dieser Schicht, aus Kohlenstoff besteht und kristallinen Kohlenstoff in Form von Graphit und/oder Graphen enthält, und wobei die Interferenzpigmente einen spezifischen Pulverwiderstand von kleiner als 1x10$^6$ Ohm*cm aufweisen.

2. Interferenzpigmente gemäß Anspruch 1, **dadurch gekennzeichnet, dass** sie einen volumengewichteten d$_{50}$-Wert von kleiner als 15 $\mu$m aufweisen.

3. Interferenzpigmente gemäß Anspruch 1 oder 2, **dadurch gekennzeichnet, dass** die äußerste, kristallinen Kohlenstoff enthaltende Schicht zu mindestens 98 Gew.% aus Kohlenstoff besteht.

4. Interferenzpigmente gemäß einem oder mehreren der Ansprüche 1 bis 3, **dadurch gekennzeichnet, dass** der Anteil der äußersten, kristallinen Kohlenstoff enthaltenden Schicht, bezogen auf das Gewicht des Interferenzpigmentes, 0,5 bis 5 Gew.-% beträgt.

5. Interferenzpigmente gemäß einem oder mehreren der Ansprüche 1 bis 4, **dadurch gekennzeichnet, dass** es sich bei dem plättchenförmigen Träger um natürliche oder synthetische Glimmerplättchen, Plättchen aus Kaolin, Sericit oder Talk, BiOCl-Plättchen, $TiO_2$-Plättchen, Glasplättchen, Borosilikatplättchen, $SiO_2$-Plättchen, $Al_2O_3$-Plättchen, Bornitrid-Plättchen, oder um Gemische aus zwei oder mehreren von diesen handelt.

6. Interferenzpigmente gemäß einem oder mehreren der Ansprüche 1 bis 5, **dadurch gekennzeichnet, dass** die Schicht oder die Schichten aus einem farblosen Material mit einer Brechzahl n im Bereich von n ≥ 1.8 zwischen dem Träger und der kristallinen Kohlenstoff enthaltenden äußersten Schicht angeordnet ist/sind und die Pigmente keine weiteren Schichten aufweisen.

7. Interferenzpigmente gemäß einem oder mehreren der Ansprüche 1 bis 6, **dadurch gekennzeichnet, dass** das farblose Material mit einer Brechzahl n im Bereich von n ≥ 1.8 ausgewählt ist aus der Gruppe bestehend aus Titandioxid, Titandioxidhydrat, Zirkondioxid, Zirkondioxidhydrat, Zinnoxid, Zinnoxidhydrat, Zinkoxid, Zinkoxidhydrat und/oder Mischphasen aus diesen.

8. Interferenzpigmente gemäß Anspruch 7, **dadurch gekennzeichnet, dass** die Schicht aus Materialien mit einer Brechzahl n im Bereich von n ≥ 1.8 aus Titandioxid und/oder Titandioxidhydrat besteht.

9. Interferenzpigmente gemäß einem oder mehreren der Ansprüche 1 bis 8, **dadurch gekennzeichnet, dass** der spezifische Pulverwiderstand kleiner als 100 Ohm*cm ist.

10. Verfahren zur Herstellung von nichtmetallischen Interferenzpigmenten gemäß einem oder mehreren der Ansprüche 1 bis 9, wobei plättchenförmige Trägerteilchen, welche mit einer oder mehreren aufeinander folgenden Schichten aus einem farblosen Material mit einer Brechzahl n von n ≥ 1,8 mit einer geometrischen Gesamtschichtdicke von höchstens 70 nm beschichtet sind und eine Teilchengröße mit einem volumengewichteten $d_{90}$-Wert von < 25 μm aufweisen, in einem Reaktor in einem Trägergasstrom unter Zufuhr einer gasförmigen, Kohlenstoff haltigen Verbindung durch pyrolytische Zersetzung der Kohlenstoff haltigen Verbindung mit einer äußersten Schicht beschichtet werden, die zu mindestens 95 Gew.%, bezogen auf das Gewicht dieser Schicht, aus Kohlenstoff besteht und kristallinen Kohlenstoff in Form von Graphit und/oder Graphen enthält und mit einer geometrischen Schichtdicke im Bereich von 0,5 bis 5 nm aufgebracht wird, wobei als gasförmige, Kohlenstoff enthaltende Verbindung Aceton, Ethin oder 2-Methyl 3-butinol-2 eingesetzt wird.

11. Verfahren gemäß Anspruch 10, **dadurch gekennzeichnet, dass** die plättchenförmigen Trägerteilchen in dem Reaktor in Bewegung gehalten werden.

12. Verwendung von nichtmetallischen Interferenzpigmenten gemäß einem oder mehreren der Ansprüche 1 bis 9 in Farben, Lacken, Druckfarben, Beschichtungszusammensetzungen, Sicherheitsanwendungen, Kunststoffen, keramischen Materialien, Gläsern, Papier, Folien, im Wärmeschutz, in Fußbodenbelägen, zur Lasermarkierung, in Trockenpräparaten oder Pigmentpräparationen.

**Claims**

1. Non-metallic interference pigments based on a flake-form non-metallic support, where the pigments have a particle size with a volume-weighted $d_{90}$ value of < 25 μm, the support has a coating comprising one or more successive layers of a colourless material having a refractive index n of n ≥ 1.8 with a geometrical overall layer thickness of at most 70 nm, and where the pigments have an outermost layer which has a geometrical layer thickness in the range from 0.5 to 5 nm and consists of at least 95% by weight, based on the weight of this layer, of carbon and comprises crystalline carbon in the form of graphite and/or graphene, and where the interference pigments have a specific powder resistance of less than $1 \times 10^6$ ohm*cm.

2. Interference pigments according to Claim 1, **characterised in that** they have a volume-weighted $d_{50}$ value of less than 15 μm.

3. Interference pigments according to Claim 1 or 2, **characterised in that** the outermost layer containing crystalline carbon consists of at least 98% by weight of carbon.

4. Interference pigments according to one or more of Claims 1 to 3, **characterised in that** the proportion of the outermost layer containing crystalline carbon, based on the weight of the interference pigment, is 0.5 to 5% by weight.

5. Interference pigments according to one or more of Claims 1 to 4, **characterised in that** the flake-form support comprises natural or synthetic mica flakes, kaolin, sericite or talc flakes, BiOCl flakes, $TiO_2$ flakes, glass flakes, borosilicate flakes, $SiO_2$ flakes, $Al_2O_3$ flakes, boron nitride flakes, or mixtures of two or more thereof.

6. Interference pigments according to one or more of Claims 1 to 5, **characterised in that** the layer or layers of a colourless material having a refractive index n in the range n $\geq$ 1.8 is/are disposed between the support and the outermost layer containing crystalline carbon, and the pigments have no further layers.

7. Interference pigments according to one or more of Claims 1 to 6, where the colourless material having a refractive index n in the range n $\geq$ 1.8 is selected from the group consisting of titanium dioxide, titanium dioxide hydrate, zirconium dioxide, zirconium dioxide hydrate, tin oxide, tin oxide hydrate, zinc oxide, zinc oxide hydrate and/or mixed phases thereof.

8. Interference pigments according to Claim 7, **characterised in that** the layer comprising materials having a refractive index n in the range n $\geq$ 1.8 consists of titanium dioxide and/or titanium dioxide hydrate.

9. Interference pigments according to one or more of Claims 1 to 8, **characterised in that** the specific powder resistance is less than 100 ohm*cm.

10. Process for the preparation of non-metallic interference pigments according to one or more of Claims 1 to 9, in which flake-form support particles which are coated with one or more successive layers of a colourless material having a refractive index n of n $\geq$ 1.8 with a geometrical overall layer thickness of at most 70 nm and have a particle size with a volume-weighted $d_{90}$ value of < 25 $\mu$m are coated with an outermost layer which consists of at least 95% by weight, based on the weight of this layer, of carbon and comprises crystalline carbon in the form of graphite and/or graphene and is applied with a geometrical layer thickness in the range from 0.5 to 5 nm, in a reactor in a stream of carrier gas with feed of a gaseous, carbon-containing compound by pyrolytic decomposition of the carbon-containing compound, where the gaseous, carbon-containing compound employed is acetone, ethyne or 2-methyl-3-butyn-2-ol.

11. Process according to Claim 10, **characterised in that** the flake-form support particles are kept in motion in the reactor.

12. Use of non-metallic interference pigments according to one or more of Claims 1 to 9 in paints, coatings, printing inks, coating compositions, security applications, plastics, ceramic materials, glasses, paper, films, in heat protection, in floorcoverings, for laser marking, in dry preparations or pigment preparations.

## Revendications

1. Pigments d'interférence non métalliques basés sur un support non métallique en forme de paillettes, les pigments ayant une taille de particule ayant une valeur $d_{90}$ pondérée en volume de < 25 $\mu$m, le support possède un revêtement comprenant une ou plusieurs couches successives d'un matériau incolore ayant un indice de réfraction n avec n $\geq$ 1,8 selon une épaisseur de couche globale géométrique d'au plus 70 nm, et où les pigments possèdent une couche la plus extérieure selon une épaisseur de couche géométrique dans la plage allant de 0,5 à 5 nm et constituée d'au moins 95% en poids, sur la base du poids de cette couche, de carbone et comprenant du carbone cristallin sous la forme de graphite et/ou de graphène, et où les pigments d'interférence possèdent une résistance spécifique de poudre inférieure à $1 \times 10^6$ ohms*cm.

2. Pigments d'interférence selon la revendication 1, **caractérisés en ce qu'**ils possèdent une valeur $d_{50}$ pondérée en volume inférieure à 15 $\mu$m.

3. Pigments d'interférence selon la revendication 1 ou 2, **caractérisés en ce que** la couche la plus extérieure contenant du carbone cristallin est constituée d'au moins 98% en poids de carbone.

4. Pigments d'interférence selon l'une ou plusieurs parmi les revendications 1 à 3, **caractérisés en ce que** la proportion de la couche la plus extérieure contenant du carbone cristallin, sur la base du poids du pigment d'interférence, va de 0,5 à 5% en poids.

5. Pigments d'interférence selon l'une ou plusieurs parmi les revendications 1 à 4, **caractérisés en ce que** le support en forme de paillettes comprend des paillettes de mica naturelles ou synthétiques, des paillettes de kaolin, de séricite ou de talc, des paillettes de BiOCl, des paillettes de $TiO_2$, des paillettes de verre, des paillettes de borosilicate, des paillettes de $SiO_2$, des paillettes de $Al_2O_3$, des paillettes de nitrure de bore, ou des mélanges de deux, ou plus, parmi celles-ci.

6. Pigments d'interférence selon l'une ou plusieurs parmi les revendications 1 à 5, **caractérisés en ce que** la couche ou les couches d'un matériau incolore ayant un indice de réfraction n dans la plage de $n \geq 1,8$ sont disposées entre le support et la couche la plus extérieure contenant du carbone cristallin, et les pigments ne possèdent pas d'autres couches.

7. Pigments d'interférence selon l'une ou plusieurs parmi les revendications 1 à 6, **caractérisés en ce que** dans lesquels le matériau incolore ayant un indice de réfraction n dans la plage de $n \geq 1,8$ est choisi dans le groupe constitué par le dioxyde de titane, le dioxyde de titane hydraté, le dioxyde de zirconium, le dioxyde de zirconium hydraté, l'oxyde d'étain, l'oxyde d'étain hydraté, l'oxyde de zinc, l'oxyde de zinc hydraté et/ou des phases mixtes de ceux-ci.

8. Pigments d'interférence selon la revendication 7, **caractérisés en ce que** la couche comprenant des matériaux ayant un indice de réfraction n dans la plage de $n \geq 1,8$ est constituée de dioxyde de titane et/ou de dioxyde de titane hydraté.

9. Pigments d'interférence selon l'une ou plusieurs parmi les revendications 1 à 8, **caractérisés en ce que** la résistance spécifique de poudre est inférieure à 100 ohms*cm.

10. Procédé de préparation de pigments d'interférence non métalliques selon l'une ou plusieurs parmi les revendications 1 à 9, dans lequel des particules de support en forme de paillettes qui sont revêtues par une ou plusieurs couches successives d'un matériau incolore ayant un indice de réfraction n avec $n \geq 1,8$ selon une épaisseur de couche globale géométrique d'au plus 70 nm et possèdent une taille de particule ayant une valeur $d_{90}$ pondérée en volume de < 25 $\mu$m sont revêtues par une couche la plus extérieure qui est constituée d'au moins 95% en poids, sur la base du poids de cette couche, de carbone et comprend du carbone cristallin sous la forme de graphite et/ou de graphène et est appliquée selon une épaisseur de couche géométrique dans la plage allant de 0,5 à 5 nm, dans un réacteur dans un courant de gaz porteur avec une alimentation en un composé carboné gazeux, par décomposition pyrolytique du composé carboné, où le composé carboné gazeux employé est l'acétone, l'éthyne ou le 2-méthyl-3-butyn-2-ol.

11. Procédé selon la revendication 10, **caractérisé en ce que** les particules de support en forme de paillettes sont maintenues en mouvement dans le réacteur.

12. Utilisation de pigments d'interférence non métalliques selon l'une ou plusieurs parmi les revendications 1 à 9 dans les peintures, les revêtements, les encres d'impression, les compositions de revêtement, les applications de sécurité, les matières plastiques, les matériaux céramiques, les verres, le papier, les films, pour la protection thermique, dans les revêtements de sols, pour le marquage au laser, dans des préparations sèches ou dans des préparations de pigment.

Fig 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 3949139 A
- US 4321087 A
- US 3053683 A
- DE 10153197
- DE 3842330
- DE 4237990
- EP 0139557 A
- EP 0359569 A
- EP 0743654 A
- US 3087827 A
- EP 0950693 A1
- US 20040165272 A1
- US 6686042 B1
- DE 4140296 A1
- DE 1467468
- DE 1959998
- DE 2009566
- DE 2214545
- DE 2215191
- DE 2244298
- DE 2313331
- DE 2522572
- DE 3137808
- DE 3137809
- DE 3151355
- DE 3211602
- DE 3235017
- US 3553001 A

### In der Beschreibung aufgeführte Nicht-Patentliteratur

- **W. KLOSE.** Deutsche Keramische Gesellschaft. *Terminologie zur Beschreibung von Kohlenstoff als Feststoff,* 2009
- **A.C. FERRARI ; J. ROBERTSON.** *University Cambridge,* 24. November 1999
- **R. GLAUSCH ; M. KIESER ; R. MAISCH ; G. PFAFF ; J. WEITZEL.** Perlglanzpigmente. Curt Vincentz Verlag, 1996, 83